(19) Europäisches Patentamt European Patent Office Office européen des brevets

(11) **EP 4 441 808 B1**

(12) **EUROPEAN PATENT SPECIFICATION**

(45) Date of publication and mention of the grant of the patent:
**14.05.2025 Bulletin 2025/20**

(21) Application number: **22835867.7**

(22) Date of filing: **14.12.2022**

(51) International Patent Classification (IPC):
*C01G 33/00* $^{(2006.01)}$        *H01M 4/485* $^{(2010.01)}$

(52) Cooperative Patent Classification (CPC):
**H01M 4/131; C01B 25/26; C01G 33/00; C01G 33/006; C01G 37/006; C01G 49/009; H01M 4/485;** C01P 2002/52; C01P 2004/51; C01P 2004/61; Y02E 60/10

(86) International application number:
**PCT/GB2022/053230**

(87) International publication number:
**WO 2023/118812 (29.06.2023 Gazette 2023/26)**

(54) **ACTIVE ELECTRODE MATERIAL**

AKTIVES ELEKTRODENMATERIAL

MATÉRIAU ACTIF D'ÉLECTRODE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **21.12.2021 GB 202118598**
**10.02.2022 GB 202201717**

(43) Date of publication of application:
**09.10.2024 Bulletin 2024/41**

(73) Proprietor: **Echion Technologies Limited**
**Cambridge CB22 3FG (GB)**

(72) Inventors:
• **SLATER, Peter**
  **Birmingham Birmingham B15 2TT (GB)**
• **MARTIN, Daniel**
  **Cambridge South West Way Sawston Cambridge CB22**
  **3FG (GB)**
• **GROOMBRIDGE, Alexander**
  **Cambridge South West Way Sawston Cambridge CB22**
  **3FG (GB)**

(74) Representative: **Carpmaels & Ransford LLP**
**One Southampton Row**
**London WC1B 5HA (GB)**

(56) References cited:
**WO-A1-2021/074594**

• **PEKHTEREVA YU A ET AL: "Search for ternary oxides of sodium, iron(III), and niobium(V)", ZHURNAL NEORGANICHESKOI KHIMII, MOSCOW, RU, vol. 44, no. 2, 1 January 1999 (1999-01-01), pages 290 - 294, XP009542730, ISSN: 0044-457X**

## Description

### *Field of the Invention*

The present invention relates to active electrode materials, methods for the manufacture of active electrode materials, and electrodes comprising active electrode materials. Such materials are of interest as active electrode materials in metal-ion batteries, such as lithium-ion or sodium-ion batteries, for example as anode materials.

### *Background*

Lithium-ion (Li-ion) batteries are a commonly used type of rechargeable battery with a global market predicted to grow to $200bn by 2030. Li-ion batteries are the technology of choice for electric vehicles that have multiple demands across technical performance to environmental impact, providing a viable pathway for a green automotive industry.

A typical lithium-ion battery is composed of multiple cells connected in series or in parallel. Each individual cell is usually composed of an anode (negative polarity electrode) and a cathode (positive polarity electrode), separated by a porous, electrically insulating membrane (called a separator), immersed into a liquid (called an electrolyte) enabling lithium ions transport.

In most systems, the electrodes are composed of an active electrode material - meaning that it is able to chemically react with lithium ions to store and release them reversibly in a controlled manner - mixed if necessary with an electrically conductive additive (such as carbon) and a polymeric binder. A slurry of these components is coated as a thin film on a current collector (typically a thin foil of copper or aluminium), thus forming the electrode upon drying.

In the known Li-ion battery technology, the safety limitations of graphite anodes upon battery charging is a serious impediment to its application in high-power electronics, automotive and industry. Among a wide range of potential alternatives proposed recently, lithium titanate (LTO) and mixed niobium oxides are the main contenders to replace graphite as the active material of choice for high power, fast-charge applications.

Batteries relying on a graphitic anode are fundamentally limited in terms of charging rate. Under nominal conditions, lithium ions are inserted into the anode active material upon charging. When charging rate increases, typical graphite voltage profiles are such that there is a high risk that overpotentials lead to the potential of sites on the anode to become < 0 V vs. Li/Li+, which leads to a phenomenon called lithium dendrite electroplating, whereby lithium ions instead deposit at the surface of the graphite electrode as lithium metal. This leads to irreversible loss of active lithium and hence rapid capacity fade of the cell. In some cases, these dendritic deposits can grow to such large sizes that they pierce the battery separator and lead to a short-circuit of the cell. This can trigger a catastrophic failure of the cell leading to a fire or an explosion. Accordingly, the fastest-charging batteries having graphitic anodes are limited to charging rates of 5-7 C, but often much less.

Lithium titanate (LTO) anodes do not suffer from dendrite electroplating at high charging rate thanks to their high potential (1.6 V vs. Li/Li+), and have excellent cycle life as they do not suffer from significant volume expansion of the active material upon intercalation of Li ions due to their accommodating 3D crystal structure. LTO cells are typically regarded as high safety cells for these two reasons. However, LTO is a relatively poor electronic and ionic conductor, which leads to limited capacity retention at high rate and resultant power performance, unless the material is nanosized to increase specific surface area, and carbon-coated to increase electronic conductivity. This particle-level material engineering increases the porosity and specific surface area of the active material, and results in a significantly lower achievable packing density in an electrode. This is significant because it leads to low density electrodes and a higher fraction of electrochemically inactive material (e.g. binder, carbon additive), resulting in much lower gravimetric and volumetric energy densities.

A key measure of anode performance is the electrode volumetric capacity (mAh/cm$^3$), that is, the amount of electric charges (that is lithium ions) that can be stored per unit volume of the anode. This is an important factor to determine the overall battery energy density on a volumetric basis (Wh/L) when combined with the cathode and appropriate cell design parameters. Electrode volumetric capacity can be approximated as the product of electrode density (g/cm$^3$), active material specific capacity (mAh/g), and fraction of active material in the electrode. LTO anodes typically have relatively low specific capacities (c. 165 mAh/g, to be compared with c. 330 mAh/g for graphite) which, combined with their low electrode densities (typically <2.0 g/cm$^3$) and low active material fractions (<90%) discussed above, lead to very low volumetric capacities (<300 mAh/cm$^3$) and therefore low battery energy density and high $/kWh cost in various applications. As a result, LTO batteries/cells are generally limited to specific niche applications, despite their long cycle life, fast-charging capability, and high safety.

Mixed niobium oxides have been known in academic literature for some time. Recently, some mixed niobium oxides have been of interest for use in Li-ion cells. For example, Zhu et al., J. Mater. Chem. A, 2019, 7, 25537 and Zhu et al., Chem. Commun., 2020,56, 7321-7324 disclose $Zn_2Nb_{34}O_{87}$ and $Cu_2Nb_{34}O_{87}$ as possible active electrode materials. These papers rely on complex particle-level engineering to purportedly achieve good properties, e.g. attempting to control particle porosity and morphology. WO2021/074593 and WO2021/074594 disclose various substituted and/or oxygen-deficient mixed niobium oxides which were found to have good properties for use as active electrode materials. However, there remains a need to identify further mixed niobium oxides with good properties for use as active electrode materials, in particular with good properties for use in Li-ion cells intended for high-power/fast-charging applications. Identifying such materials e.g. without the need for extensive particle-level engineering and/or without coatings is an important step to low-cost battery materials for mass market uptakes.

## Summary of the Invention

In a first aspect, the invention provides an electrode comprising a mixed niobium oxide as an active electrode material, wherein the mixed niobium oxide has the formula $M^I_{x-u}M^y_{(x/(5-y))}M^V_zNb_{100-(x/(5-y))-z}O_{250-u/2}$ as defined in the claims.

The mixed niobium oxide may also have the formula $B_aM^V_zNb_{100-a-z}O_{250-a}$ as defined in the claims.

The mixed niobium oxide may also have the formula $M_bNb_{100-b}O_{250-2.5b+bc}$ as defined in the claims.

The inventors have found that electrodes according to the first aspect retain a surprisingly high capacity even when delithiated at high rates of e.g. 5C and 10C, as shown by the present examples. These are important results in demonstrating the advantages of the mixed niobium oxides of the invention for use in high-power batteries designed for fast charge/discharge.

In a second aspect, the invention provides a metal-ion battery comprising a mixed niobium oxide as an active electrode material, wherein the mixed niobium oxide is as defined in the first aspect. Optionally the metal-ion battery is a lithium-ion battery or a sodium-ion battery, preferably a lithium-ion battery.

In a third aspect, the invention provides use of a mixed niobium oxide is as defined in the first aspect as an active electrode material in a metal-ion battery. Optionally the metal-ion battery is a lithium-ion battery or a sodium-ion battery, preferably a lithium-ion battery.

In a fourth aspect, the invention provides a method of making an electrode, comprising providing a mixed niobium oxide as defined in the first aspect; and depositing the mixed niobium oxide onto a current collector, thereby forming the electrode.

## Summary of the Figures

The principles of the invention will now be discussed with reference to the accompanying figures.

Figure 1: XRD patterns of selected synthesised Wadsley-Roth $4\times4$ octahedral block structures.

Figure 2: TEM micrographs and selected area electron diffraction acquired using a Thermo Scientific (FEI) Talos F200X G2 TEM of Sample 11. Left: High magnification imaging showing highly crystalline structure. Right: Selected area electron diffraction with the (110) interplanar distance matching that determined by XRD.

Figure 3: XRD pattern for sample 18 collected using a CuKa X-ray source.

Figure 4: Voltage vs. state of charge/discharge curves of the 2nd cycle formation for samples 3 and 18 within half-cells using a C-rate of C/10 from 3.0 to 1.1 V.

## Detailed Description of the Invention

The term "mixed niobium oxide" refers to an oxide comprising niobium and at least one other cation. mixed niobium oxides have a high redox voltage vs. Lithium >0.8V, enabling safe and long lifetime operation, crucial for fast charging battery cells. Moreover, niobium cations can have two redox reactions per atom, resulting in higher theoretical capacities than, for example, LTO.

The mixed niobium oxide may have the formula $M^I_{x-u}M^y_{(x/(5-y))}M^V_zNb_{100-(x/(5-y))-z}O_{250-u/2}$, wherein:

$M^I$ is a cation having an oxidation state of 1, wherein $M^I$ is selected from Li, Na, K, and mixtures thereof;

$M^y$ is a cation having an average oxidation state of y, wherein $M^y$ is selected from Li, Na, K, Cu, Zn, Mg, Ca, Ni, Fe, Mn, Co, Cr, V, Al, B, Ga, Sc, Y, In, La, Yb, Ce, Zr, Ti, Sn, Ge, Si, P, Ta, W, Mo, and mixtures thereof;

$M^V$ is a cation having an average oxidation state of 5, wherein $M^V$ is selected from Mn, Fe, Al, Ga, Y, In, La, Yb, Cu, Zn, Mg, Ni, Co, Ca, Ce, Zr, Ti, Sn, Ge, Si, V, P, Ta, W, Mo, Cr, and mixtures thereof;

$$1 \leq y \leq 4;$$

$$0.5 \leq x \leq 6;$$

$$0 \leq z \leq 10;$$

$$0 \leq u \leq 5;$$

$$x > u.$$

The mixed niobium oxide may also have the formula $B_aM^v_zNb_{100-a-z}O_{250-a}$, wherein $M^V$ is a cation having an average oxidation state of 5, wherein $M^V$ is selected from Mn, Fe, Al, Ga, Y, In, La, Yb, Cu, Zn, Mg, Ni, Co, Ca, Ce, Zr, Ti, Sn, Ge, Si, V, P, Ta, W, Mo, Cr, and mixtures thereof;

$$0 \leq z \leq 10;$$

$$0 < a \leq 8.$$

The mixed niobium oxide may also have the formula $M_bNb_{100-b}O_{250-2.5b+bc}$, wherein M is a cation selected from P, B, W, Mo, V, Ti, Si, and mixtures thereof;
c is half of the average oxidation state of M;

$$1.5 \leq c \leq 3;$$

and

$$0.5 < b \leq 6.$$

The mixed niobium oxides having the formulas defined herein are unified because they may adopt a crystal structure which is believed to contribute towards their advantageous properties for use as active electrode materials. In particular, the mixed niobium oxides may adopt a crystal structure having a Wadsley-Roth crystal structure comprising $4 \times 4$ octahedral blocks. Wadsley-Roth crystal structures are considered to be a crystallographic off-stoichiometry of the $MO_3$ ($ReO_3$) crystal structure containing crystallographic shear, with simplified formula of $MO_{3-x}$. As a result, these structures typically contain $[MO_6]$ octahedral subunits in their crystal structure. In the $4 \times 4$ octahedral block structure each block is connected through edge-sharing octahedra only. This structure was reported in 1967 as having a monoclinic unit cell ($a$ = 28.51 Å, $b$ = 3.830 Å, $c$ = 17.48 Å, $\beta$ = 120.80°, space group = C2/m). This and related structures have been reported in historic academic literature but no electrochemical lithiation or de-lithiation data has been provided (Andersson, Zeitschrift für anorganische und allgemeine Chemie, Volume351, Issue 1-2, April 1967, Pages 106-112; Pekhtereva, Yu.A., & Shukaev, I.L. (1999), Zhurnal Neorganicheskoj Khimii, 44(2), 290-294; Cava et al 1983 J. Electrochem. Soc. 130 2345; Villafuerte-Castrejón, Journal of Solid State Chemistry, Volume 71, Issue 1, November 1987, Pages 103-108; Norin and Bertil, Acta Chemica Scandinavica, volume 25 (1971), Pages: 741-743; Reisman and Holtzberg, J. Am. Chem. Soc. 1958, 80, 24, 6503-6507). It is believed that the large block size is advantageous for rapid insertion and removal of lithium as compared to other Wadsley-Roth structures of smaller octahedral block sizes, with potentially higher stability than those with larger octahedral block sizes.

The polymorph of niobium oxide $N$-$Nb_2O_5$ adopts a Wadsley-Roth crystal structure comprising $4 \times 4$ octahedral blocks. Accordingly, the crystal structure of the mixed niobium oxide, as determined by X-ray diffraction, preferably corresponds to the crystal structure of $N$-$Nb_2O_5$. The crystal structure of $N$-$Nb_2O_5$ may be found at Andersson 1967, Zeitschrift für anorganische und allgemeine Chemie, Volume351, Issue 1-2, April 1967.

Compared to the empirical formula of $N$-$Nb_2O_5$, the mixed niobium oxides according to the invention have a modified ratio of cations to anions. In the formula $M^I_{x-u}M^y_{(x/(5-y))}M^V_zNb_{100-(x/(5-y))-z}O_{250-u/2}$ some Nb has been substituted by both $M^I$ and $M^y$, increasing the ratio of cations to anions. In the formula $B_aM^v_zNb_{100-a-z}O_{250-a}$ some Nb has been substituted by B causing the loss of oxygen from the crystal structure to maintain charge neutrality, also increasing the ratio of cations to anions; the crystal structure of materials having this formula may contain some tetrahedral boron cations between the $4 \times 4$ octahedral blocks. This modification is believed to contribute towards the advantageous properties of the mixed niobium oxides for use as active electrode materials. For instance, the modified cation to anion ratio is believed to stabilise the crystal structure.

The crystal structure of a material may be determined by analysis of X-ray diffraction (XRD) patterns, typically obtained from a Cu K$\alpha$ source, as is widely known. For instance, XRD patterns obtained from a given material can be compared to known XRD patterns to confirm the crystal structure, e.g. via public databases such as the ICDD crystallography database. Rietveld analysis and Pawley analysis can also be used to determine the crystal structure of materials, in particular for the unit cell parameters. Therefore, the mixed niobium oxide may have a Wadsley-Roth crystal structure comprising 4×4 octahedral blocks, as determined by X-ray diffraction.

Here the term 'corresponds' is intended to reflect that peaks in an X-ray diffraction pattern may be shifted by no more than 0.5 degrees (preferably shifted by no more than 0.25 degrees, more preferably shifted by no more than 0.1 degrees) from corresponding peaks in an X-ray diffraction pattern of the material listed above.

The mixed niobium oxide may adopt a monoclinic crystal structure, for example having unit cell parameters a = 25.7-31.4 Å, b= 3.4-4.2 Å, c= 15.8-19.3 Å, $\alpha$=90°, $\beta$=112.6-137.6°, $\gamma$=90°. Unit cell parameters may be determined by X-ray diffraction.

$M^I$ is a cation having an oxidation state of 1. $M^I$ is selected from Li, Na, K, and mixtures thereof. Preferably, $M^I$ is selected from Li, Na, and mixtures thereof.

x is the atomic amount of $M^I$, having the range $0.5 \leq x \leq 6$. x may be an integer, e.g. x = 1, 2, 3, 4, 5, or 6. Optionally, $2 \leq x \leq 5$, such as x = 2, 3, 4, or 5. Preferably, x = 4.

The formula may be deficient in $M^I$, e.g. if some of the 1+ cation is lost via volatility since it typically has a low atomic weight. Accordingly, the atomic amount of x may be modified by variable $0 \leq u \leq 5$, where x > u, e.g. $x \geq u + 1$. Optionally $0 \leq u \leq 3$ or $0.01 \leq u \leq 2$. Alternatively, u = 0.

$M^y$ is a cation having an average oxidation state of y. The term "average oxidation state" means that when more than one cation is present the oxidation state refers to $M^y$ as a whole. For example, if 1/3 of $M^y$ is $W^{6+}$ and 2/3 of $M^y$ is $Fe^{3+}$, then y is 4 ($1/3 \times 6$ (the contribution from W) + $2/3 \times 3$ (the contribution from Fe)). However, $M^y$, $M^{II}$, $M^{III}$, $M^{IV}$, and $M^V$ may consist of a single cation, in which case the oxidation state is the oxidation state of that cation.

$M^y$ is selected from Li, Na, K, Cu, Zn, Mg, Ca, Ni, Fe, Mn, Co, Cr, V, Al, B, Ga, Sc, Y, In, La, Yb, Ce, Zr, Ti, Sn, Ge, Si, P, Ta, W, Mo, and mixtures thereof. $M^y$ may be selected from Li, Na, K, Cu, Zn, Mg, Ni, Fe, Mn, Co, Cr, V, Al, B, Ga, Zr, Ti, Si, P, Ta, and mixtures thereof; or Li, Na, Cu, Zn, Mg, Ni, Fe, Mn, Co, Cr, Al, B, Ga, Zr, Ti, and mixtures thereof. Optionally, $M^y$ does not contain Li.

y has the range $1 \leq y \leq 4$, optionally $2 \leq y \leq 4$. y may be an integer, e.g. y = 1, 2, 3, or 4; preferably 2, 3, and 4. When y is an integer, optionally all cations forming $M^y$ have the same oxidation state.

When y is 1, 2, 3, or 4 $M^y$ may be selected from Li, Na, Cu, Zn, Mg, Ca, Ni, Fe, Mn, Co, Cr, Al, B, Ga, Sc, Y, In, La, Yb, Ce, Zr, Ti, Sn, Ge, and mixtures thereof.

When y is 2, 3, or 4 $M^y$ may be selected from Cu, Zn, Mg, Ca, Ni, Fe, Mn, Co, Mn, Cr, Al, B, Ga, Sc, Y, In, La, Yb, Ce, Zr, Ti, Sn, Ge, and mixtures thereof.

The atomic amount of $M^y$ depends on the amount of $M^I$ and the oxidation state of $M^y$, having the relationship x/(5-y).

$M^V$ is an optional cation having an average oxidation state of 5. Optionally, $M^V$ is a cation having an oxidation state of 5, wherein all cations forming $M^V$ have the same oxidation state of 5.

The atomic amount of $M^V$ is z, having the range $0 \leq z \leq 10$. Optionally, $0 \leq z \leq 5$. z may be > 0, e.g. > 0.01. Alternatively, z=0 in which case $M^V$ is not present.

$M^V$ is selected from Mn, Fe, Al, Ga, Y, In, La, Yb, Cu, Zn, Mg, Ni, Co, Ca, Ce, Zr, Ti, Sn, Ge, Si, V, P, Ta, W, Mo, Cr, and mixtures thereof. $M^V$ may be selected from Ce, Zr, Ti, Sn, Ge, Si, V, P, Ta, W, Mo, Cr, V, P, Ta, and mixtures thereof; or V, P, Ta, and mixtures thereof. Optionally all cations forming $M^V$ have an oxidation state of 5.

When y = 1, the mixed niobium oxide may have the formula $M^I_{x-u}N^I_{x/4}M^V_z Nb_{100-x/4-z}O_{250-u/2}$, wherein $N^I$ is a cation having an oxidation state of 1. $N^I$ may be selected from Li, Na, K and mixtures thereof; preferably Li, Na, and mixtures thereof.

When y = 2, the mixed niobium oxide may have the formula $M^I_{x-u}M^{II}_{x/3}M^V_z Nb_{100-x/3-z}O_{250-u/2}$, wherein $M^{II}$ is a cation having an average oxidation state of 2. $M^{II}$ may be selected from Cu, Zn, Mg, Ni, Fe, Mn, Co, Ca , and mixtures thereof; or Cu, Zn, Mg, Ni, and mixtures thereof; or Zn, Mg, Ni, and mixtures thereof. Optionally all cations forming $M^{II}$ have an oxidation state of 2.

When y = 3, the mixed niobium oxide may have the formula $M^I_{x-u}M^{III}_{x/2}M^V_z Nb_{100-x/2-z}O_{250-u/2}$, wherein $M^{III}$ is a cation having an average oxidation state of 3. $M^{III}$ may be selected from Mn, Cr, V, Fe, Al, B, Ga, Y, In, La, Yb, Ce, and mixtures thereof; or Mn, Cr, Fe, Al, B, Ga, Y, and mixtures thereof; or Cr, Al, Fe, and mixtures thereof. Optionally all cations forming $M^{III}$ have an oxidation state of 3.

When y = 4, the mixed niobium oxide may have the formula $M^I_{x-u}M^{IV}_x M^V_z Nb_{100-x-z}O_{250-u/2}$, wherein $M^{IV}$ is a cation having an average oxidation state of 4. $M^{IV}$ may be selected from Zr, Ti, Mn, Ce, Sn, Ge, V, Si, and mixtures thereof; or Zr, Ti, Sn, Ge, V, and mixtures thereof; or Ti, V, and mixtures thereof. Optionally all cations forming $M^{IV}$ have an oxidation state of 4.

The atomic amount of B in $B_a M^V_z Nb_{100-a-z}O_{250-a}$ is a, having the range $0 < a \leq 8$, for example $0.01 < a \leq 8$. Optionally, $1 \leq a \leq 5$ or $1.5 \leq a \leq 3$. a may be an integer. Preferably a = 2. Up to 10 at.% of the cations may be partially substituted by at least one cation selected from P, K, Fe, Ti, Zr, Sn, Ge, Zn, Mg, Al, Ga, Y, W, Mo, Cr, V, Si, Ni, Mn, Ta, Li, Na, and mixtures thereof; or Ti, W, Mo, Cr, Zn, Al, Fe, P, and mixtures thereof.

In $M_b Nb_{100-b}O_{250-2.5b+bc}$ as described above, M is a cation selected from P, B, W, Mo, V, Ti, Si, and mixtures thereof. M may be selected from P, W, B, Ti, and mixtures thereof; or P, W, and mixtures thereof. Preferably M comprises P and/or W. Up to 10 at.% of the cations may be partially substituted by at least one cation selected from K, Fe, Zr, Sn, Ge, Zn, Mg, Al, Ga, Y, Cr, Ni, Mn, Ta, Li, Na and mixtures thereof; or Cr, Zn, Al, Fe, and mixtures thereof. b is $0.5 < b \leq 6$, or $1 \leq b \leq 5.75$, or $1.5 \leq b \leq 5.5$. c is half of the average oxidation state of M and is $1.5 \leq c \leq 3$, or $2 \leq c \leq 2.75$, or 2.5.

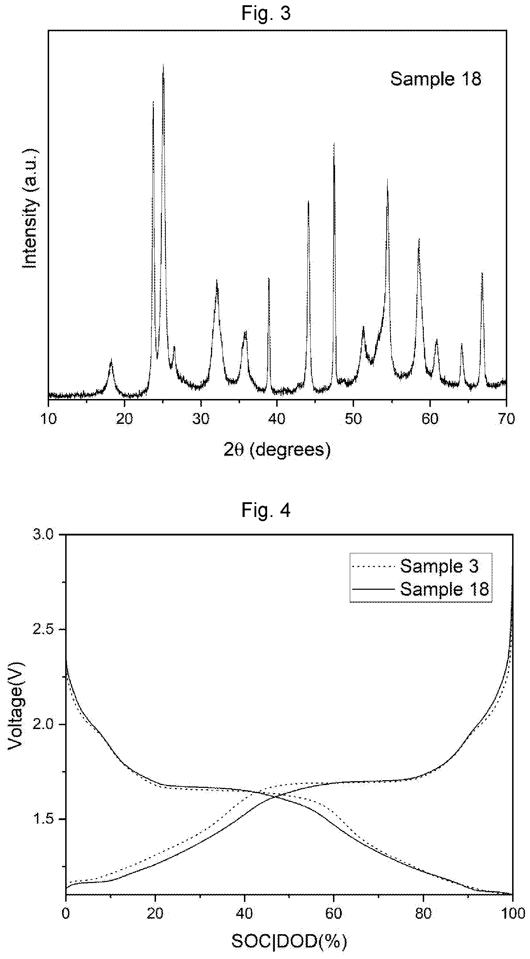

In an X-ray diffraction pattern of $M_bNb_{100-b}O_{250-2.5b+bc}$ from a CuKa source, the most intense peak between 18.15 - 18.65° $2\theta$ may have a full width half maximum of $> 0.2$; optionally $> 0.4$, $> 0.6$, and/or $< 0.9$ (e.g. $>0.2$ to $<0.9$). Figure 3 shows an XRD pattern of a sample having this peak. It is believed that samples with this peak encompass the presence of some connecting tetrahedral cations between the $4 \times 4$ octahedral blocks within the Wadsley-Roth crystal structure. Materials having this crystal structure were found to have particularly high capacity.

It will be understood that the discussion of the variables of the formula (e.g. M, $M^I$, x, u, $M^y$, y, $M^v$, z, a, b, c) is intended to be read in combination. For example, the mixed niobium oxide may have the formula $M^I_{x-u}M^y_{(x/(5-y))}M^V_z Nb_{100-(x/(5-y))-z}O_{250-u/2}$, wherein:

$M^I$ is Li, Na, and mixtures thereof;

$M^y$ is a cation having an average oxidation state of y selected from Li, Na, Cu, Zn, Mg, Ca, Ni, Fe, Mn, Co, Cr, Al, B, Ga, Sc, Y, In, La, Yb, Ce, Zr, Ti, Sn, Ge, and mixtures thereof;

$M^V$ is a cation having an average oxidation state of 5 selected from V, P, Ta, and mixtures thereof;

$$1 \leq y \leq 4;$$

$$2 \leq x \leq 6;$$

$$0 \leq z \leq 10;$$

$$0 \leq u \leq 3;$$

$$x \geq u + 1.$$

For example, the mixed niobium oxide may have the formula $M^I_x M^y_{(x/(5-y))}Nb_{100-(x/(5-y))}O_{250}$, wherein:

$M^I$ is Li, Na, and mixtures thereof;

$M^y$ is a cation having an oxidation state of y selected from Li, Na, Cu, Zn, Mg, Ca, Ni, Fe, Mn, Co, Cr, Al, B, Ga, Sc, Y, In, La, Yb, Ce, Zr, Ti, Sn, Ge, and mixtures thereof, wherein all cations forming $M^y$ have the same oxidation state;

$$y = 1, 2, 3, \text{ or } 4;$$

$$x = 3, 4, \text{ or } 5.$$

$M^y$, $M^I$, $N^I$, $M^{II}$, $M^{III}$, $M^{IV}$, and M may also be selected from each of the specific elements used as such in the examples.

Optionally, the mixed niobium oxide only contains Li if a further cation other than Li and Nb is present. An example of such a material is $Li_4Cr_2Nb_{98}O_{250}$, where Cr is the cation other than Li and Nb. In addition, the mixed niobium oxide may be free from Li. It will be understood that the mixed niobium oxides, including those free from Li, may reversibly intercalate Li *in situ* when acting as an active electrode material in a lithium-ion battery.

The cations in the mixed niobium oxide may be partially substituted by further cations of different oxidation state, for example up to 20 at.%, 10 at.%, or 5 at.% of cations may be substituted. Substitution by a cation of different oxidation state forms a charge imbalanced material. The charge imbalance may be compensated for by oxygen deficiency (for substitution by a cation of lower oxidation state) or excess (for substitution by a cation of higher oxidation state). Alternately or in addition, the charge imbalance may be compensated for by oxidation or reduction of cations.

The oxygen anions may be partially substituted by an alternative electronegative anion such as F, Cl, Br, S, Se, N, and mixtures thereof. Optionally up to 10 at.% or 5 at% of the oxygen anions may be partially substituted by an alternative electronegative anion.

The mixed niobium oxide is preferably in particulate form. The mixed niobium oxide may have a $D_{50}$ particle diameter in the range of 0.1-100 μm, or 0.5-50 μm, or 1-20 μm. These particle sizes are advantageous because they are easy to process and fabricate into electrodes. Moreover, these particle sizes avoid the need to use complex and/or expensive methods for providing nanosized particles. Nanosized particles (e.g. particles having a $D_{50}$ particle diameter of 100 nm or less) are typically more complex to synthesise and require additional safety considerations.

The mixed niobium oxide may have a $D_{10}$ particle diameter of at least 0.05 μm, or at least 0.1 μm, or at least 0.5 μm, or at least 1 μm. By maintaining a $D_{10}$ particle diameter within these ranges, the potential for parasitic reactions in a Li ion cell is reduced from having reduced surface area, and it is easier to process with less binder in the electrode slurry.

The mixed niobium oxide may have a $D_{90}$ particle diameter of no more than 200 μm, no more than 100 μm, no more than 50 μm, or no more than 20 μm. By maintaining a $D_{90}$ particle diameter within these ranges, the proportion of the particle size distribution with large particle sizes is minimised, making the material easier to manufacture into a homogenous electrode.

The term "particle diameter" refers to the equivalent spherical diameter (esd), i.e. the diameter of a sphere having the same volume as a given particle, where the particle volume is understood to include the volume of any intra-particle pores. The terms "$D_n$" and "$D_n$ particle diameter" refer to the diameter below which n% by volume of the particle population is found, i.e. the terms "$D_{50}$" and "$D_{50}$ particle diameter" refer to the volume-based median particle diameter below which 50% by volume of the particle population is found. Where a material comprises primary crystallites agglomerated into secondary particles, it will be understood that the particle diameter refers to the diameter of the secondary particles. Particle diameters can be determined by laser diffraction. Particle diameters can be determined in accordance with ISO 13320:2009, for example using Mie theory.

The mixed niobium oxide may have a BET surface area in the range of 0.1-100 $m^2$/g, or 0.2-50 $m^2$/g, or 0.5-20 $m^2$/g. In general, a low BET surface area is preferred in order to minimise the reaction of the mixed niobium oxide with the electrolyte, e.g. minimising the formation of solid electrolyte interphase (SEI) layers during the first charge-discharge cycle of an electrode comprising the material. However, a BET surface area which is too low results in unacceptably low charging rate and capacity due to the inaccessibility of the bulk of the mixed niobium oxide to metal ions in the surrounding electrolyte.

The term "BET surface area" refers to the surface area per unit mass calculated from a measurement of the physical adsorption of gas molecules on a solid surface, using the Brunauer-Emmett-Teller theory. For example, BET surface areas can be determined in accordance with ISO 9277:2010.

The mixed niobium oxide may be coated with carbon, e.g. to improve its surface electronic conductivity and/or to prevent reactions with electrolyte.

The mixed niobium oxide may have a protective coating; optionally the protective coating comprises niobium oxide, aluminium oxide, zirconium oxide, organic or inorganic fluorides, organic or inorganic phosphates, titanium oxide, lithiated versions thereof, and mixtures thereof.

In the first aspect the mixed niobium oxide forms the active electrode material of an electrode, preferably of an anode for a lithium-ion battery. However, any of the mixed niobium oxides defined herein may be provided as an active electrode material suitable for incorporating into an electrode. For example, the mixed niobium oxides disclosed herein may be provided as raw materials, not as part of an electrode, e.g. for sale to electrode manufacturers.

The electrode is of the form of an electrode composition in electrical contact with a current collector, where the electrode composition comprises the mixed niobium oxide. A current collector is typically a metal foil, e.g. copper or aluminium foil.

Optionally, the mixed niobium oxide forms at least 5 wt.%, 10 wt.%, or 50 wt.% of the total active electrode material in the electrode. The mixed niobium oxide may form the sole active electrode material in the electrode.

The electrode composition may further comprise at least one other component selected from a binder, a conductive additive, a different active electrode material (e.g. a further mixed niobium oxide as defined herein), and mixtures thereof. For instance, one electrode composition comprises about 92 wt% mixed niobium oxide, about 5 wt% conductive additive (e.g. carbon black), and about 3 wt% binder (e.g. poly(vinyldifluoride)), based on the total dry weight of the electrode composition.

Examples of suitable binders include polyvinylidene fluoride and its copolymers (PVDF), polytetrafluoroethylene (PTFE) and its copolymers, polyacrylonitrile (PAN), poly(methyl)methacrylate or poly(butyl)methacrylate, polyvinyl chloride (PVC), polyvinyl fomal, polyetheramide, polymethacrylic acid, polyacrylamide, polyitaconic acid, polystyrene sulfonic acid, polyacrylic acid (PAA) and alkali metal salts thereof, modified polyacrylic acid (mPAA) and alkali metal salts thereof, cellulose-based polymers, carboxymethylcellulose (CMC), modified carboxymethylcellulose (mCMC), sodium carboxymethylcellulose (Na-CMC), polyvinylalcohol (PVA), alginates and alkali metal salts thereof, butadieneacrylonitrile rubber (NBR), hydrogenated form of NBR (HNBR), styrene-butadiene rubber (SBR) and polyimide. The binder may be present in the electrode composition at 0-30 wt%, or 0.1-10 wt%, or 0.1-5 wt%, based on the total dry weight of the electrode composition.

Conductive additives are preferably non-active materials which are included so as to improve electrical conductivity between the active electrode material and between the active electrode material and the current collector. The conductive additives may suitably be selected from graphite, carbon black, carbon fibers, vapor-grown carbon fibres (VGCF), carbon nanotubes, graphene, acetylene black, ketjen black, metal fibers, metal powders and conductive metal oxides. Preferred conductive additives include carbon black and carbon nanotubes. Conductive additives may be present in the electrode composition at 0-20 wt%, 0.1-10 wt%, or 0.1-5 wt%, based on the total dry weight of the electrode composition.

The active electrode material may be present in the electrode composition at 100-50 wt%, 99.8-80 wt%, or 99.8-90 wt%, based on the total dry weight of the electrode composition. When the active electrode material is present at 100 wt.% of the electrode composition it may for a solid-state electrode.

When a different active electrode material is present in addition to the mixed niobium oxide, it may be selected from lithium titanium oxide, titanium niobium oxide, a different mixed niobium oxide, graphite, hard carbon, soft carbon, silicon, doped versions thereof, and mixtures thereof.

The mixed niobium oxide may be in combination with a lithium titanium oxide to form an active electrode material.

The lithium titanium oxide preferably has a spinel or ramsdellite crystal structure, e.g. as determined by X-ray diffraction. An example of a lithium titanium oxide having a spinel crystal structure is $Li_4Ti_5O_{12}$. An example of a lithium titanium oxide having a ramsdellite crystal structure is $Li_2Ti_3O_7$. These materials have been shown to have good properties for use as active electrode materials. Therefore, the lithium titanium oxide may have a crystal structure as determined by X-ray diffraction corresponding to $Li_4Ti_5O_{12}$ and/or $Li_2Ti_3O_7$. The lithium titanium oxide may be selected from $Li_4Ti_5O_{12}$, $Li_2Ti_3O_7$, and mixtures thereof.

The lithium titanium oxide may be doped with additional cations or anions. The lithium titanium oxide may be oxygen deficient. The lithium titanium oxide may comprise a coating, optionally wherein the coating is selected from carbon, polymers, metals, metal oxides, metalloids, phosphates, and fluorides.

The lithium titanium oxide may be synthesised by conventional ceramic techniques, for example solid-state synthesis or sol-gel synthesis. Alternatively, the lithium titanium oxide may be obtained from a commercial supplier.

The lithium titanium oxide is in preferably in particulate form. The lithium titanium oxide may have a $D_{50}$ particle diameter in the range of 0.1-50 $\mu$m, or 0.25-20 $\mu$m, or 0.5-15 $\mu$m. The lithium titanium oxide may have a $D_{10}$ particle diameter of at least 0.01 $\mu$m, or at least 0.1 $\mu$m, or at least 0.5 $\mu$m. The lithium titanium oxide may have a $D_{90}$ particle diameter of no more than 100 $\mu$m, no more than 50 $\mu$m, or no more than 25 $\mu$m. By maintaining a $D_{90}$ particle diameter in this range the packing of lithium titanium oxide particles in the mixture with mixed niobium oxide particles is improved.

Lithium titanium oxides are typically used in battery anodes at small particle sizes due to the low electronic conductivity of the material. In contrast, the mixed niobium oxide as defined herein may be used at larger particle sizes since it typically has a higher lithium ion diffusion coefficient than lithium titanium oxide. Advantageously, in the composition the lithium titanium oxide may have a smaller particle size than the mixed niobium oxide, for example such that the ratio of the $D_{50}$ particle diameter of the lithium titanium oxide to the $D_{50}$ particle diameter of the mixed niobium oxide is in the range of 0.01:1 to 0.9:1, or 0.1:1 to 0.7:1. In this way, the smaller lithium titanium oxide particles may be accommodated in the voids between the larger mixed niobium oxide particles, increasing the packing efficiency of the composition.

The lithium titanium oxide may have a BET surface area in the range of 0.1-100 $m^2$/g, or 1-50 $m^2$/g, or 3-30 $m^2$/g.

The ratio by mass of the lithium titanium oxide to the mixed niobium oxide may be in the range of 0.5 : 99.5 to 99.5 : 0.5, preferably in the range of 2 : 98 to 98 : 2. In one implementation the active electrode material comprises a higher proportion of the lithium titanium oxide than the mixed niobium oxide, e.g. the ratio by mass of at least 2:1, at least 5:1, or at least 8:1. Advantageously, this allows the mixed niobium oxide to be incrementally introduced into existing electrodes based on lithium titanium oxides without requiring a large change in manufacturing techniques, providing an efficient way of improving the properties of existing electrodes. In another implementation the active electrode material has a higher proportion of the mixed niobium oxide than the lithium titanium oxide, e.g. such that the ratio by mass of the lithium titanium oxide to the mixed niobium oxide is less than 1:2, or less than 1:5, or less than 1:8. Advantageously, this allows for the cost of the active electrode material to be reduced by replacing some of the mixed niobium oxide with lithium titanium oxide.

The mixed niobium oxide may be in combination with a niobium oxide to form an active electrode material. The niobium oxide may be selected from $Nb_{12}O_{29}$, $NbO_2$, $NbO$, and $Nb_2O_5$. Preferably, the niobium oxide is $Nb_2O_5$.

The niobium oxide may be doped with additional cations or anions, for example provided that the crystal structure of the niobium oxide corresponds to the crystal structure of an oxide consisting of Nb and O, e.g. $Nb_{12}O_{29}$, $NbO_2$, $NbO$, and $Nb_2O_5$. The niobium oxide may be oxygen deficient. The niobium oxide may comprise a coating, optionally wherein the coating is selected from carbon, polymers, metals, metal oxides, metalloids, phosphates, and fluorides.

The niobium oxide may have the crystal structure of $Nb_{12}O_{29}$, $NbO_2$, $NbO$, or $Nb_2O_5$ as determined by X-ray diffraction. For example, the niobium oxide may have the crystal structure of orthorhombic $Nb_2O_5$ or the crystal structure of monoclinic $Nb_2O_5$. Preferably, the niobium oxide has the crystal structure of monoclinic $Nb_2O_5$, most preferably the crystal structure of $H$-$Nb_2O_5$. Further information on crystal structures of $Nb_2O_5$ may be found at Griffith et al., J. Am. Chem. Soc. 2016, 138, 28, 8888-8899.

The niobium oxide may be synthesised by conventional ceramic techniques, for example solid-state synthesis or sol-gel synthesis. Alternatively, the niobium oxide may be obtained from a commercial supplier.

The niobium oxide is in preferably in particulate form. The niobium oxide may have a $D_{50}$ particle diameter in the range of 0.1-100 $\mu$m, or 0.5-50 $\mu$m, or 1-20 $\mu$m. The niobium oxide may have a $D_{10}$ particle diameter of at least 0.05 $\mu$m, or

at least 0.5 μm, or at least 1 μm. The niobium oxide may have a $D_{90}$ particle diameter of no more than 100 μm, no more than 50 μm, or no more than 25 μm. By maintaining a $D_{90}$ particle diameter in this range the packing of niobium oxide particles in the mixture with mixed niobium oxide particles is improved.

The niobium oxide may have a BET surface area in the range of 0.1-100 $m^2/g$, or 1-50 $m^2/g$, or 1-20 $m^2/g$.

The ratio by mass of the niobium oxide to the mixed niobium oxide may be in the range of 0.5 : 99.5 to 99.5 : 0.5, or in the range of 2 : 98 to 98 : 2, or preferably in the range of 15 : 85 to 35 : 55.

The invention also provides the use of the mixed niobium oxides defined herein in an anode for a metal-ion battery, optionally wherein the metal-ion battery is a lithium-ion or sodium-ion battery, preferably a lithium-ion battery. Lithium-ion batteries include liquid-based batteries, polymer-based batteries, semisolid-based batteries and full solid-state-based batteries.

A further implementation of the invention is an electrochemical device comprising an anode, a cathode, and an electrolyte disposed between the anode and the cathode, wherein the anode comprises an active electrode material according to the first aspect of the invention; optionally wherein the electrochemical device is metal-ion battery such as a lithium-ion battery or a sodium-ion battery. For example, the anode may be an electrode in accordance with the first aspect of the invention. Preferably, the electrochemical device is a lithium-ion battery having a reversible anode active material specific capacity of greater than 180 mAh/g at 20 mA/g, wherein the battery can be charged and discharged at current densities relative to the anode active material of 200 mA/g or more, or 1000 mA/g or more, or 2000 mA/g or more, or 4000 mA/g or more whilst retaining greater than 70% of the initial cell capacity at 20 mA/g. It has been found that use of the active electrode materials of the first aspect of the invention can enable the production of a lithium-ion battery with this combination of properties, representing a lithium-ion battery that is particularly suitable for use in applications where high charge and discharge current densities are desired. Notably, the examples have shown that active electrode materials according to the first aspect of the invention have excellent capacity retention at high C-rates.

The electrochemical device preferably has an N/P ratio >1, wherein N/P is defined as:

$$\frac{\text{areal loading (mgcm}^{-2})(\text{anode}) \times \text{active fraction(wt\%)(anode)} \times \text{first lithiation capacity(mAhg}^{-1})(\text{anode})}{\text{areal loading (mgcm}^{-2})(\text{cathode}) \times \text{active fraction(wt\%)(cathode)} \times \text{first delithiation capacity(mAhg}^{-1})(\text{cathode})}$$

wherein:

areal loading ($mgcm^{-2}$) is the dry loading of the electrode composition, not taking into account the current collector;
active fraction (wt%) is the percentage of the dry electrode composition that is active material;
first lithiation/delithiation capacity ($mAhg^{-1}$) is the specific capacity at C/10 at 25 °C for the first lithiation cycle for the anode or the first delithiation cycle for the cathode measured on an equivalent half-cell with a Li-metal counter electrode.

The first lithiation/delithiation capacity is measured on an equivalent half-cell. An equivalent half-cell can be understood to utilise the same electrode composition deposited at the same areal loading and active fraction as the full cell. For the anode, the first constant current C/10 lithiation (discharge, negative current) capacity (vs Li/Li+) at 25 °C is measured. For the cathode, the first constant current C/10 delithiation (charge, positive current) capacity (vs Li/Li+) at 25 °C is measured.

N/P is preferably greater than one, e.g. ≥1.01. N/P may be in the range of >1-2, or 1.01-1.5, or most preferably 1.05-1.3.

The cathode comprises an active cathode material which may be selected from nickel-based layered oxides of the class $LiNi_{1x}M_xO_2$ where M = Co, Mn, Al such as NMCs - lithium nickel manganese cobalt oxides, NCAs - lithium cobalt aluminium oxides, and LCOs - lithium cobalt oxides; and LNMOs - lithium nickel manganese oxides (e.g. $LiNi_{0.5}Mn_{1.5}O_4$). For example, the active cathode material may be a lithium nickel manganese cobalt oxide. Active cathode materials are widely available from commercial suppliers. Active cathode materials may be doped with additional cations and/or anions.

The choice of the active electrode material can affect the appropriate voltage range, including for determining the first lithiation/delithiation capacity. For example, appropriate voltage ranges may be LNMO: 5.2-3V, upper cut off 5.2V; NCA, NMC, and LCO: 4.5-2.7V, upper cut off 4.5V; mixed niobium oxide: 3-0V, lower cut off 0V. Narrower ranges may be LNMO: 5-3V, upper cut off 5V; NCA, NMC, and LCO: 4.3-2.7V, upper cut off 4.3V; mixed niobium oxide: 3V-1.0V, lower cut off 1.0V.

An appropriate voltage range may be determined empirically. For example, the voltage profile correlates to the change in energy state of the anode and cathode materials associated with removal or insertion of electrons and ions. The cut-off voltage for the cell may be selected to fall before a specific inflection point in the voltage profile which corresponds to a rise in energy state of one or both electrodes beyond a critical level which leads the crystal structure to decay to a lower energy structure at a rate which is significantly harmful to the cell's performance. The absolute voltage at which this happens is a function of the electrode potentials of both electrodes, but can be calculated by use of a common reference electrode and need not be determined experimentally for well-established material families with reliable standard electrochemical behaviour.

The cathode active material is preferably in particulate form, e.g. having a $D_{50}$ particle diameter in the range of 0.1-100 $\mu$m, or 0.5-50 $\mu$m, or 1-20 $\mu$m.

The electrolyte may include any material suitable for metal-ion battery operation, preferably lithium-ion battery operation. For example, the electrolyte may be a non-aqueous solution (e.g., an organic electrolytic solution). The electrolyte may include one or more non-aqueous solvents and a salt that is at least partially dissolved in the solvent. For example, the solvent may include an organic solvent, such as, e.g., ethylene carbonate (EC) and/or other carbonate based solvents, or butyrate, or acetate, or mixtures thereof. The solvent may include 1 M $LiPF_6$ dissolved in an aprotic solvent mixture, such as a 1:1 by weight of a mixture of ethylene carbonate and other carbonate based solvents or butyrate or acetate. Salts suitable for use in the invention include $LiPF_6$, $LiSbF_6$, $LiBF_4$, LiTFSI, LiFSI, $LiAlCl_4$, $LiAsF_6$, $LiClO_4$, $LiGaCl_4$, $LiC(SO_2CF_3)_3$, $LiN(CF_3SO_2)_2$, $Li(CF_3SO_3)$, $LiB(C_6H_4O_2)_2$, LiBOB (lithium bis(oxalate) borate), and LiDFOB (lithium difluoro (oxalate) borate). Low-viscosity solvents (e.g., organic solvents) suitable for use in the electrolyte may include, but are not limited to ethyl methyl carbonate (EMC), dioxlane (DOL), ethyl acetate (EA); propylene acetate (PA); butyl acetate (BA); methyl butyrate (MB); ethyl butyrate (EB); dimethyl carbonate (DMC); diethyl carbonate (DEC); 1,2-dimethoxyethane (DME); tetrahydrofuran (THF); methyl acetate (MA); diglyme (DGL); triglyme; tetraglyme; cyclic carbonates; cyclic esters; cyclic amides; propylene carbonate (PC); methyl propyl carbonate (MPC); acetonitrile; dimethyl sulfoxide (DMS); dimethyl formamide; dimethyl acetamide; gamma-butyrolactone (GBL); and N-methyl-pyrrolidinone (NMP); as well as various mixtures or combinations thereof.

The mixed niobium oxide may be synthesised by conventional ceramic techniques. For example, it may be made by one or more of solid-state synthesis or sol-gel synthesis. The mixed niobium oxide may additionally be synthesised by one or more of alternative techniques commonly used, such as hydrothermal or microwave hydrothermal synthesis, solvothermal or microwave solvothermal synthesis, coprecipitation synthesis, spark or microwave plasma synthesis, combustion synthesis, electrospinning, spray pyrolysis, chemical vapour deposition, atomic layer deposition, and mechanical alloying.

The mixed niobium oxide may be provided by a method comprising steps of: providing one or more precursor materials; mixing said precursor materials to form a precursor material mixture; and heat treating the precursor material mixture in a temperature range from 400 °C - 1350 °C or 800 - 1250 °C, thereby providing the mixed niobium oxide.

To provide a mixed niobium oxide comprising an additional electronegative anion than oxygen the method may further comprise the steps of: mixing the mixed niobium oxide with a precursor comprising an additional electronegative anion to provide a further precursor material mixture; and heat treating the further precursor material mixture in a temperature range from 300 - 1200 °C or 800 - 1100 °C optionally under reducing conditions, thereby providing the mixed niobium oxide comprising an additional electronegative anion.

For example, to provide a mixed niobium oxide comprising N, the method may further comprise the steps of: mixing the mixed niobium oxide with a precursor comprising N (for example melamine or urea) to provide a further precursor material mixture; and heat treating the further precursor material mixture in a temperature range from 300 - 1200 °C under reducing conditions (for example under $N_2$), thereby providing the mixed niobium oxide comprising N.

For example, to provide a mixed niobium oxide comprising F, the method may further comprise the steps of: mixing the mixed niobium oxide with a precursor comprising F (for example polyvinylidene fluoride or $NH_4F$) to provide a further precursor material mixture; and heat treating the further precursor material mixture in a temperature range from 300 - 1200 °C under oxidising conditions (for example in air), thereby providing the mixed niobium oxide comprising F.

The method may comprise the further step of heat treating the mixed niobium oxide in a temperature range from 400 - 1350 °C or 800 - 1250 °C under reducing conditions, thereby inducing oxygen vacancies in the mixed niobium oxide.

The precursor materials for making the mixed niobium oxide may include one or more metal oxides, metal hydroxides, metal salts or ammonium salts. For example, the precursor materials may include one or more metal oxides or metal salts of different oxidation states and/or of different crystal structure. Examples of suitable precursor materials include but are not limited to: $Nb_2O_5$, $Nb(OH)_5$, Niobic Acid, NbO, Ammonium Niobate Oxalate, $NH_4H_2PO_4$, $(NH_4)_2PO_4$, $(NH_4)_3PO_4$, $P_2O_5$, $H_3PO_3$, $Ta_2O_5$, $WO_3$, $ZrO_2$, $TiO_2$, $MoO_3$, $V_2O_5$, $ZrO_2$, CuO, ZnO, $Al_2O_3$, $K_2O$, KOH, CaO, $GeO_2$, $Ga_2O_3$, $SnO_2$, CoO, $Co_2O_3$, $Fe_2O_3$, $Fe_3O_4$, MnO, $MnO_2$, NiO, $Ni_2O_3$, $H_3BO_3$, ZnO, $Li_2CO_3$, $Na_2CO_3$, $H_3BO_3$, NiO, $Mg_5(CO_3)_4(OH)_2.5H_2O$, and and MgO. The precursor materials may not comprise a metal oxide, or may comprise ion sources other than oxides. For example, the precursor materials may comprise metal salts (e.g. $NO_3^-$, $SO_3^-$) or other compounds (e.g. oxalates, carbonates). For the substitution of the oxygen anion with other electronegative anions, the precursors may include one or more organic compounds, polymers, inorganic salts, organic salts, gases, or ammonium salts; examples include but are not limited to: melamine, $NH_4HCO_3$, $NH_3$, $NH_4F$, PVDF, PTFE, $NH_4Cl$, $NH_4Br$, $NH_4I$, $Br_2$, $Cl_2$, $I_2$, ammonium oxychloride amide, and hexamethylenetetramine.

When it is desired to make a mixed niobium oxide comprising a cation of a specific oxidation state a precursor comprising that cation at that oxidation state may be selected. For example, when making a mixed niobium oxide

comprising $Mn^{2+}$, MnO may be used as the precursor. When making a mixed niobium oxide comprising $Mn^{4+}$, $MnO_2$ may be used as the precursor.

Some or all of the precursor materials may be particulate materials. Where they are particulate materials, preferably they have a $D_{50}$ particle diameter of less than 20 $\mu$m in diameter, for example from 10 nm to 20 $\mu$m. Providing particulate materials with such a particle diameter can help to promote more intimate mixing of precursor materials, thereby resulting in more efficient solid-state reaction during the heat treatment step. However, it is not essential that the precursor materials have an initial particle size of <20 $\mu$m in diameter, as the particle size of the one or more precursor materials may be mechanically reduced during the step of mixing said precursor materials to form a precursor material mixture.

The step of mixing the precursor materials to form a precursor material mixture and/or further precursor material mixture may be performed by a process selected from: dry or wet/solvated planetary ball milling, rolling ball milling, high energy ball milling, bead milling, pin milling, a classification step, high shear milling, air jet milling, steam jet milling, planetary mixing, powder plending, and/or impact milling. The force used for mixing/milling may depend on the morphology of the precursor materials. For example, where some or all of the precursor materials have larger particle sizes (e.g. a $D_{50}$ particle diameter of greater than 20 $\mu$m), the milling force may be selected to reduce the particle diameter of the precursor materials such that the such that the particle diameter of the precursor material mixture is reduced to 20 $\mu$m in diameter or lower. When the particle diameter of particles in the precursor material mixture is 20 $\mu$m or less, this can promote a more efficient solid-state reaction of the precursor materials in the precursor material mixture during the heat treatment step. The solid-state synthesis may also be undertaken in pellets formed at high pressure (>10 MPa) from the precursor powders.

The step of heat treating the precursor material mixture and/or the further precursor material mixture may be performed for a time of from 1 hour to 24 hours, more preferably from 3 hours to 18 hours. For example, the heat treatment step may be performed for 1 hour or more, 2 hours or more, 3 hours or more, 6 hours or more, or 12 hours or more. The heat treatment step may be performed for 24 hours or less, 18 hours or less, 16 hours or less, or 12 hours or less.

The step of heat treating the precursor material mixture may be performed in a gaseous atmosphere, preferably air. Suitable gaseous atmospheres include: air, $N_2$, Ar, He, $CO_2$, CO, $O_2$, $H_2$, $NH_3$ and mixtures thereof. The gaseous atmosphere may be a reducing atmosphere. Where it is desired to make an oxygen-deficient material, preferably the step of heat treating the precursor material mixture is performed in an inert or reducing atmosphere.

The step of heat treating the further precursor material mixture may be performed under reducing conditions. Reducing conditions include under an inert gas such as nitrogen, helium, argon; or under a mixture of an inert gas and hydrogen; or under vacuum. Preferably, the step of heat treating the further precursor material mixture comprises heating under inert gas.

The further step of heat treating the mixed niobium oxide and/or the mixed niobium oxide comprising additional electronegative anions optionally under reducing conditions may be performed for a time of from 0.5 hour to 24 hours, more preferably from 2 hours to 18 hours. For example, the heat treatment step may be performed for 0.5 hour or more, 1 hours or more, 3 hours or more, 6 hours or more, or 12 hours or more. The further step heat treating may be performed for 24 hours or less, 18 hours or less, 16 hours or less, or 12 hours or less. Reducing conditions include under an inert gas such as nitrogen, helium, argon; or under a mixture of an inert gas and hydrogen; or under vacuum. Preferably heating under reducing conditions comprises heating under inert gas.

In some methods it may be beneficial to perform a two-step heat treatment. For example, the precursor material mixture and/or the further precursor material mixture may be heated at a first temperature for a first length of time, follow by heating at a second temperature for a second length of time. Preferably the second temperature is higher than the first temperature. Performing such a two-step heat treatment may assist the solid-state reaction to form the desired crystal structure. This may be carried out in sequence, or may be carried out with an intermediate re-grinding step.

The method may include one or more post-processing steps after formation of the mixed niobium oxide. In some cases, the method may include a post-processing step of heat treating the mixed niobium oxide, sometimes referred to as 'annealing'. This post-processing heat treatment step may be performed in a different gaseous atmosphere to the step of heat treating the precursor material mixture to form the mixed niobium oxide. The post-processing heat treatment step may be performed in an inert or reducing gaseous atmosphere. Such a post-processing heat treatment step may be performed at temperatures of above 500 °C, for example at about 900 °C. Inclusion of a post-processing heat treatment step may be beneficial to e.g. form deficiencies or defects in the mixed niobium oxide, for example to induce oxygen deficiency; or to carry out anion exchange on the formed mixed niobium oxide e.g. N exchange for the O anion.

The method may include a step of milling and/or classifying the mixed niobium oxide (e.g. impact milling, jet milling, steam jet milling, high energy milling, high shear milling, pin milling, air classification, wheel classification, sieving, cyclonic separation, bead milling) to provide a material with any of the particle size parameters given above.

The invention provides a method of making an electrode, the method comprising providing a mixed niobium oxide as defined herein; and depositing the mixed niobium oxide onto a current collector, thereby forming the electrode. Providing the mixed niobium oxide may include synthesising the mixed niobium oxide by the methods provided herein. The depositing step may include forming a slurry of the mixed niobium oxide and a solvent. The slurry may comprise at least one other component selected from a binder, a conductive additive, a different active electrode material, and mixtures thereof. The slurry may be deposited onto a current collector and the solvent removed, thereby forming an electrode layer on the current collector. Further steps, such as heat treatment to cure any binders and/or calendaring of the electrode layer may be carried out as appropriate. For example, the solvent may be removed by drying e.g. at temperatures of 30-100°C. The electrode may be calendared to a density of 2-3.5 or 2.6-2.9 g cm$^{-3}$. The electrode layer may have a thickness in the range of from 5 $\mu$m to 2 mm, preferably 5 $\mu$m to 1 mm, preferably 5 $\mu$m to 500 $\mu$m, preferably 5 $\mu$m to 200 $\mu$m, preferably 5 $\mu$m to 100 $\mu$m, preferably 5 $\mu$m to 50 $\mu$m.

Alternatively, the slurry may be formed into a freestanding film or mat comprising the mixed niobium oxide, for instance by casting the slurry onto a suitable casting template, removing the solvent and then removing the casting template. The resulting film or mat is in the form of a cohesive, freestanding mass which may then be bonded to a current collector by known methods.

***Examples***

The mixed niobium oxides were synthesised by a solid-state route. Appropriate amounts of $Nb_2O_5$ and precursor materials were mixed and milled, *e.g.*, using a pestle and mortar or impact mill, to form a homogeneous precursor mixture. The resulting mixtures were heat treated in an alumina crucible to high temperatures (> 800 °C) for 6 - 12 h, using a heating rate of between 5 - 10 °/min. The process was repeated until the desired single phase (4×4 Wadsley-Roth block structure) was observed within the X-ray diffraction pattern. Specifically, stoichiometric amounts of precursor materials ($Nb_2O_5$, $Li_2CO_3$, $Na_2CO_3$, $H_3BO_3$, $TiO_2$, $Al_2O_3$, $Fe_2O_3$, $Cr_2O_3$, NiO and $Mg_5(CO_3)_4(OH)_2.5H_2O$) were mixed and milled either in by hand for 15 mins in a pestle and mortar (*ca.* 5g) or using an impact mill at 20,000 rpm for 4 mins (*ca.* 50g). The resulting powders were placed in an alumina crucible and heat treated within a muffle furnace in air at $T_1$ = 875 - 1150 °C, optionally 900 - 1150 °C, for 6 - 12 h. A heating rate of 5 °C/min was used for all heating steps. An additional milling and heat treatment step $T_2$ was optionally carried out to improve phase purity. Following this, a final milling step was utilised using a pestle and mortar or impact mill for de-agglomeration. The compositions and synthesis parameters are summarised within Table 1.

Table 1: Summary of materials synthesised

| Sample | Composition | $T_1$ (°C; h) | T2 (°C; h) | D10 ($\mu$m) | D50 ($\mu$m) | D90 ($\mu$m) |
|---|---|---|---|---|---|---|
| 1 | $Li_5Nb_{99}O_{250}$ | 1150; 6h | 1150; 6h | 4.1 | 5.9 | 9.1 |
| 2 | $Na_5Nb_{99}O_{250}$ | 900; 12h | 925: 6h | 0.9 | 6.4 | 48.2 |
| 3 | $B_2Nb_{98}O_{248}$ | 900; 12h | 925: 6h | 0.2 | 3.5 | 7.9 |
| 4 | $Li_4Cr_2Nb_{98}O_{250}$ | 1150; 6h | 1150; 6h | 5.2 | 11.5 | 78.2 |
| 5 | $Li_4Al_2Nb_{98}O_{250}$ | 1125; 6h | 1150; 6h | 3.5 | 5.8 | 9.2 |
| 6 | $Li_4Fe_2Nb_{98}O_{250}$ | 900; 12h | 1125: 6h | 3.1 | 5.2 | 8.6 |
| 7 | $Na_2Li_2Fe_2Nb_{98}O_{250}$ | 900; 12h | 1125: 6h | 3.1 | 5.6 | 9.3 |
| 8 | $Na_4Cr_2Nb_{98}O_{250}$ | 900; 12 h | 1100; 6h | 0.2 | 3.2 | 6.9 |
| 9 | $Na_4Fe_2Nb_{98}O_{250}$ | 900; 12h | 1100; 6h | 0.2 | 3.3 | 7.6 |
| 10 | $Na_4Ti_4Nb_{96}O_{250}$ | 900; 12h | 1100; 6h | 3.0 | 5.3 | 8.6 |
| 11 | $Li_4Ti_4Nb_{96}O_{250}$ | 900; 12h | 1125: 6h | 2.7 | 5.1 | 8.5 |
| 12 | $Li_2Na_2Ti_4Nb_{98}O_{250}$ | 900; 12h | 1125: 6h | 2.3 | 5.3 | 9.2 |
| 13 | $(Li_{3.75}Na_{0.25})NaNb_{99}O_{250}$ | 900; 12h | 1100; 6h | 2.9 | 5.0 | 8.1 |
| 14 | $Na_4Mg_{1.33}Nb_{98.67}O_{250}$ | 900; 12h | 1070; 6h | 1.5 | 4.3 | 7.6 |
| 15 | $B_{1.54}Nb_{98.46}O_{248.46}$ | 825; 12h | | 0.2 | 3.7 | 9.8 |
| 16 | $B_2Ti_{0.5}W_{0.5}Nb_{97}O_{248}$ | 900; 12h | | 0.2 | 3.9 | 11.4 |
| 17 | $B_2Ti_{0.5}Mo_{0.5}Nb_{97}O_{248}$ | 900; 12h | | 0.2 | 3.6 | 8.3 |
| 18 | $Nb_{98.2}P_{1.8}O_{250}$ | 925; 6h | | 0.6 | 5.5 | 44.0 |
| 19 | $Nb_{96.4}P_{3.6}O_{250}$ | 925; 6h | | 0.2 | 4.5 | 20.9 |
| 20 | $Nb_{97.3}P_{2.7}O_{250}$ | 925; 6h | | 0.2 | 5.1 | 36.3 |
| 21 | $Nb_{96.4}P_{1.8}B_{1.8}O_{248.2}$ | 875; 6h | | 0.3 | 6.1 | 17.9 |
| 22 | $Nb_{98.2}P_{1.4}B_{0.4}O_{249.6}$ | 925; 6h | | 0.3 | 4.5 | 8.4 |
| 23 | $Nb_{94.6}Ti_{1.8}W_{1.8}P_{1.8}O_{250}$ | 925; 6h | | 0.2 | 3.8 | 10.3 |
| 24 | $Nb_{96.4}W_{2.4}B_{1.2}O_{250}$ | 925; 6h | | 0.2 | 3.6 | 10.1 |

## Materials Characterisation

The phase purity of samples was analysed using a Rigaku Miniflex powder X-ray diffractometer in the $2\theta$ range (10-70°) at 1°/min scan rate, or a Bruker D8 Powder diffractometer in the $2\theta$ range 10-50 or 10-60° (step size 0.0189°, time per step 0.42s).

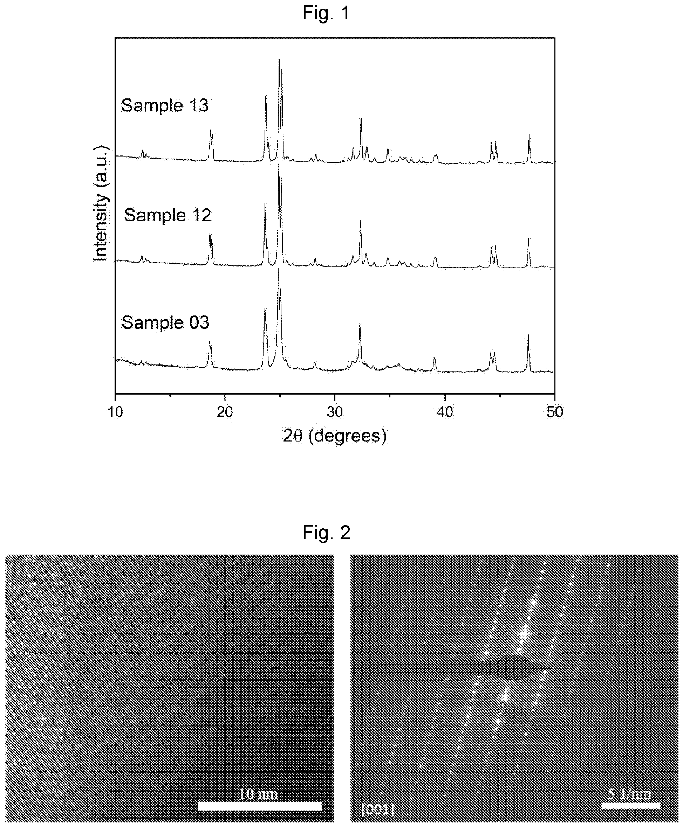

Figures 1 and 3 show the measured XRD diffraction patterns for selected Samples. Figure 2 shows TEM micrographs which show the highly crystalline structure achieved. Table 2 provides unit cell parameters derived from Pawley refinement based on the $N$-$Nb_2O_5$ structure.

Table 2: Summary of unit cell parameters for samples calculated from a Pawley refinement within the Topas software.

| Sample | a [Å] | b [Å] | c [Å] | β [°] | Vol [Å³] | $\chi^2$ |
|---|---|---|---|---|---|---|
| $N$-$Nb_2O_5$ reference | 28.51 | 3.830 | 17.48 | 120.80 | | |
| 1 | 28.528 | 3.827 | 17.570 | 125.03 | 1570.87 | 1.9 |
| 3 | 28.538 | 3.824 | 17.561 | 125.07 | 1568.40 | 2.0 |
| 4 | 28.535 | 3.832 | 17.573 | 125.13 | 1571.63 | 1.8 |
| 5 | 28.499 | 3.826 | 17.571 | 125.22 | 1565.29 | 1.7 |
| 6 | 28.492 | 3.823 | 17.558 | 125.06 | 1565.35 | 2.0 |
| 7 | 28.512 | 3.827 | 17.544 | 124.97 | 1568.88 | 1.7 |
| 11 12 | 28.603 28.616 | 3.843 3.844 | 17.591 17.592 | 124.94 124.92 | 1584.98 1586.78 | 3.1 3.3 |
| 14 | 28.550 | 3.831 | 17.598 | 125.213 | 1572.78 | 2.0 |

## Electrochemical Characterisation

Li-ion cell charge rate is usually expressed as a "C-rate". A 1C charge rate means a charge current such that the cell is fully charged in 1 h, 10C charge means that the battery is fully charged in 1/10th of an hour (6 minutes). C-rate hereon is defined from the reversible capacity observed of the anode within the voltage limits applied in its second cycle de-lithiation, i.e. for an anode that exhibits 1.0 mAh cm$^{-2}$ capacity within the voltage limits of 1.1 - 3.0 V, a 1C rate corresponds to a current density applied of 1.0 mA cm$^{-2}$. In a typical material as described herein, this corresponds to ~185 mA/g of active material.

Electrochemical tests were carried out in half-coin cells (CR2032 size) for analysis. In half-coin tests, the active material is tested in an electrode versus a Li metal electrode to assess its fundamental performance. In the below examples, the active material composition to be tested was combined with N-Methyl Pyrrolidone (NMP), carbon black (Super P) acting as a conductive additive, and poly(vinyldifluoride) (PVDF) binder and mixed to form a slurry using a lab-scale centrifugal planetary mixer. The non-NMP composition of the slurries was 92 wt% active material, 5 wt% conductive additive, 3 wt% binder. The slurry was coated on an Al foil current collector to the desired loading of 50 - 100 g m$^{-2}$ by doctor blade coating and dried by heating. The electrodes were then calendared to a density of 2.6 - 2.9 g cm$^{-3}$ at 80°C to achieve targeted porosities of 35-47%. Electrodes were punched out at the desired size and combined with a separator (*Celgard* porous PP/PE), Li metal, and electrolyte (1.3 M LiPF$_6$ in EC/DEC) inside a steel coin cell casing and sealed under pressure. Cycling was then carried out at 25°C at low current rates (C/10) for 2 full cycles of lithiation and de-lithiation between 1.1 - 3.0 V. Afterwards, the cells were tested for their performance at increasing current densities. During these tests, the cells were cycled asymmetric at 25°C, with a slow lithiation (C/5) followed by increasing de-lithiation rates (e.g. 1C, 5C, 10C) to provide the capacity retention.

Data has been averaged from 3 to 5 cells prepared from the same electrode coating, with the error shown from the standard deviation. Accordingly, the data represent a robust study showing the improvements achieved by the materials according to the invention compared to prior materials. These data are shown in Tables 3 and 4. Voltage vs. state of charge/discharge curves for samples 1 and 18 are shown in Figure 4.

Homogeneous, smooth coatings on both Cu and Al current collector foils, the coatings being free of visible defects or aggregates may also be prepared as above for these samples with a centrifugal planetary mixer to a composition of up to 94 wt% active material, 4 wt% conductive additive, 2 wt% binder. These can be prepared with both PVDF (*i.e.* NMP-based) and CMC:SBR-based (*i.e.* water-based) binder systems. The coatings can be calendared at 80°C for PVDF and 50°C for CMC:SBR to porosities of 35-40% at loadings from 1.0 to 5.0 mAh cm$^{-2}$. This is important to demonstrate the viability of these materials in both high energy and high-power applications, with high active material content.

Table 3: Performance of the electrodes at C/10 for 2 full cycles of lithiation and de-lithiation between 1.1 - 3.0 V

| Sample | Composition | Delithiation specific capacity 2nd C/10 cycle [mAh/g] |
|---|---|---|
| 1 | $Li_5Nb_{99}O_{250}$ | $184 \pm 5$ |
| 2 | $Na_5Nb_{99}O_{250}$ | $197 \pm 2$ |
| 3 | $B_2Nb_{98}O_{248}$ | $211 \pm 6$ |
| 4 | $Li_4Cr_2Nb_{98}O_{250}$ | $185 \pm 2$ |
| 5 | $Li_4Al_2Nb_{98}O_{250}$ | $183 \pm 3$ |
| 6 | $Li_4Fe_2Nb_{98}O_{250}$ | $166 \pm 6$ |
| 7 | $Na_2Li_2Fe_2Nb_{98}O_{250}$ | $196 \pm 2$ |
| 8 | $Na_4Cr_2Nb_{98}O_{250}$ | $197 \pm 4$ |
| 9 | $Na_4Fe_2Nb_{98}O_{250}$ | $202 \pm 3$ |
| 10 | $Na_4Ti_4Nb_{96}O_{250}$ | $190 \pm 2$ |
| 11 | $Li_4Ti_4Nb_{96}O_{250}$ | $189 \pm 3$ |
| 12 | $Li_2Na_2Ti_4Nb_{98}O_{250}$ | $190 \pm 2$ |
| 13 | $(Li_{3.75}Na_{0.25})NaNb_{99}O_{250}$ | $198 \pm 3$ |
| 14 | $Na_4Mg_{1.33}Nb_{98.67}O_{250}$ | $191 \pm 3$ |
| 15 | $B_{1.54}Nb_{98.46}O_{248.46}$ | $215 \pm 3$ |
| 16 | $B_2Ti_{0.5}W_{0.5}Nb_{97}O_{248}$ | $217 \pm 6$ |
| 17 | $B_2Ti_{0.5}Mo_{0.5}Nb_{97}O_{248}$ | $230 \pm 5$ |
| 18 | $Nb_{98.2}P_{1.8}O_{250}$ | $228 \pm 4$ |
| 19 | $Nb_{96.4}P_{3.6}O_{250}$ | $227 \pm 2$ |
| 20 | $Nb_{97.3}P_{2.7}O_{250}$ | $221 \pm 6$ |
| 21 | $Nb_{96.4}P_{1.8}B_{1.8}O_{248.2}$ | $208 \pm 3$ |
| 22 | $Nb_{98.2}P_{1.4}B_{0.4}O_{249.6}$ | $216 \pm 3$ |
| 23 | $Nb_{94.6}Ti_{1.8}W_{1.8}P_{1.8}O_{250}$ | $209 \pm 2$ |
| 24 | $Nb_{96.4}W_{2.4}B_{1.2}O_{250}$ | $213 \pm 2$ |

Table 4: Performance of the electrodes at increasing current densities

| Sample | Composition | Delithiation specific capacity 0.5C [mAh/g] | Delithiation specific capacity 1C [mAh/g] | Delithiation specific capacity 5C [mAh/g] | Delithiation specific capacity 10C [mAh/g] |
|---|---|---|---|---|---|
| 1 | $Li_5Nb_{99}O_{250}$ | $172 \pm 2$ | $174 \pm 4$ | $174 \pm 3$ | $172 \pm 1$ |
| 2 | $Na_5Nb_{99}O_{250}$ | $186 \pm 2$ | $178 \pm 1$ | $145 \pm 3$ | $113 \pm 4$ |
| 3 | $B_2Nb_{98}O_{248}$ | $206 \pm 1$ | $204 \pm 1$ | $200 \pm 3$ | $190 \pm 8$ |
| 4 | $Li_4Cr_2Nb_{98}O_{250}$ | $173 \pm 4$ | $173 \pm 1$ | $170 \pm 1$ | $169 \pm 1$ |
| 5 | $Li_4Al_2Nb_{98}O_{250}$ | $174 \pm 3$ | $174 \pm 3$ | $173 \pm 3$ | $173 \pm 3$ |
| 6 | $Li_4Fe_2Nb_{98}O_{250}$ | $158 \pm 3$ | $158 \pm 4$ | $157 \pm 6$ | $158 \pm 7$ |
| 7 | $Na_2Li_2Fe_2Nb_{98}O_{250}$ | $177 \pm 1$ | $175 \pm 2$ | $172 \pm 2$ | $169 \pm 2$ |
| 8 | $Na_4Cr_2Nb_{98}O_{250}$ | $195 \pm 1$ | $195 \pm 1$ | $189 \pm 2$ | $183 \pm 7$ |
| 9 | $Na_4Fe_2Nb_{98}O_{250}$ | $194 \pm 1$ | $192 \pm 1$ | $190 \pm 1$ | $186 \pm 2$ |
| 10 | $Na_4Ti_4Nb_{96}O_{250}$ | $176 \pm 8$ | $178 \pm 2$ | $177 \pm 1$ | $173 \pm 3$ |
| 11 | $Li_4Ti_4Nb_{96}O_{250}$ | $179 \pm 3$ | $180 \pm 3$ | $181 \pm 4$ | $175 \pm 4$ |
| 12 | $Li_2Na_2Ti_4Nb_{98}O_{250}$ | $181 \pm 2$ | $180 \pm 1$ | $176 \pm 1$ | $172 \pm 3$ |
| 13 | $(Li_{3.75}Na_{0.25})NaNb_{99}O_{250}$ | $186 \pm 1$ | $185 \pm 1$ | $184 \pm 2$ | $183 \pm 1$ |
| 14 | $Na_4Mg_{1.33}Nb_{98.67}O_{250}$ | $188 \pm 3$ | $188 \pm 3$ | $185 \pm 5$ | $181 \pm 7$ |
| 15 | $B_{1.5}Nb_{98}O_{247.25}$ | $207 \pm 2$ | $207 \pm 3$ | $204 \pm 3$ | $197 \pm 4$ |
| 16 | $B_2Ti_{0.5}W_{0.5}Nb_{97}O_{246.5}$ | $209 \pm 3$ | $208 \pm 2$ | $201 \pm 4$ | $192 \pm 6$ |
| 17 | $B_2Ti_{0.5}Mo_{0.5}Nb_{97}O_{246.5}$ | $218 \pm 1$ | $215 \pm 1$ | $207 \pm 2$ | $195 \pm 5$ |
| 18 | $Nb_{98.2}P_{1.8}O_{250}$ | $217 \pm 7$ | $214 \pm 6$ | $204 \pm 4$ | $193 \pm 4$ |
| 19 | $Nb_{96.4}P_{3.6}O_{250}$ | $211 \pm 2$ | $210 \pm 2$ | $192 \pm 2$ | $169 \pm 6$ |

(continued)

| Sample | Composition | Delithiation specific capacity 0.5C [mAh/g] | Delithiation specific capacity 1C [mAh/g] | Delithiation specific capacity 5C [mAh/g] | Delithiation specific capacity 10C [mAh/g] |
|---|---|---|---|---|---|
| 20 | $Nb_{97.3}P_{2.7}O_{250}$ | $210 \pm 6$ | $210 \pm 8$ | $198 \pm 4$ | $185 \pm 1$ |
| 21 | $Nb_{96.4}P_{1.8}B_{1.8}O_{248.2}$ | $203 \pm 2$ | $201 \pm 2$ | $198 \pm 2$ | $191 \pm 1$ |
| 22 | $Nb_{98.2}P_{1.4}B_{0.4}O_{249.6}$ | $206 \pm 3$ | $204 \pm 2$ | $188 \pm 2$ | $154 \pm 7$ |
| 23 | $Nb_{94.6}Ti_{1.8}W_{1.8}P_{1.8}O_{250}$ | $205 \pm 1$ | $202 \pm 1$ | $192 \pm 1$ | $185 \pm 2$ |
| 24 | $Nb_{96.4}W_{2.4}B_{1.2}O_{250}$ | $203 \pm 5$ | $202 \pm 4$ | $198 \pm 3$ | $192 \pm 4$ |

## Discussion

The mixed niobium oxides according to the invention were found to exhibit remarkable properties at high delithiation rates of e.g. 5C and 10C. In particular, in some cases, the specific capacity at lower rates is largely retained at high rates, e.g. with the capacity at 10C being 97.7% or greater of the capacity at 0.5C; an exceptionally high capacity retention. These are important results in demonstrating the advantages of the mixed niobium oxides of the invention for use in high-power batteries designed for fast charge/discharge.

## Claims

1. An electrode comprising a mixed niobium oxide as an active electrode material, wherein the electrode is of the form of an electrode composition in electrical contact with a current collector, where the electrode composition comprises the mixed niobium oxide, wherein the mixed niobium oxide has the formula $M^I_{x-u}M^y_{(x/(5-y))}M^V_zNb_{100-(x/(5-y))-z}O_{250-u/2}$, wherein:

   $M^I$ is a cation having an oxidation state of 1, wherein $M^I$ is selected from Li, Na, K, and mixtures thereof;
   $M^y$ is a cation having an average oxidation state of y, wherein $M^y$ is selected from Li, Na, K, Cu, Zn, Mg, Ca, Ni, Fe, Mn, Co, Cr, V, Al, B, Ga, Sc, Y, In, La, Yb, Ce, Zr, Ti, Sn, Ge, Si, P, Ta, W, Mo, and mixtures thereof;
   $M^V$ is a cation having an average oxidation state of 5, wherein $M^V$ is selected from Mn, Fe, Al, Ga, Y, In, La, Yb, Cu, Zn, Mg, Ni, Co, Ca, Ce, Zr, Ti, Sn, Ge, Si, V, P, Ta, W, Mo, Cr, and
   mixtures thereof;

$$1 \leq y \leq 4;$$

$$0.5 \leq x \leq 6;$$

$$0 \leq z \leq 10;$$

$$0 \leq u \leq 5;$$

$$x > u.$$

2. The electrode according to claim 1, wherein:

   (i) y is 1, 2, 3, or 4; or
   (ii) y is $2 \leq y \leq 4$; or
   (iii) y is 2, 3, or 4.

3. The electrode according to claim 1 or claim 2, wherein all cations forming $M^y$ have the same oxidation state.

4. The electrode according to any of claims 1-3, wherein the mixed niobium oxide has the formula:

(i) $M^I_{x-u}N^I_{x/4}M^V_zNb_{100-x/4-z}O_{250-u/2}$, wherein:
$N^I$ is a cation having an oxidation state of 1; or
(ii) $M^I_{x-u}M^{II}_{x/3}M^V_zNb_{100-x/3-z}O_{250-u/2}$, wherein:
$M^{II}$ is a cation having an average oxidation state of 2, optionally wherein all cations forming $M^{II}$ have an oxidation state of 2; or
(iii) $M^I_{x-u}M^{III}_{x/2}M^V_zNb_{100-x/2-z}O_{250-u/2}$, wherein:
$M^{III}$ is a cation having an average oxidation state of 3, optionally wherein all cations forming $M^{III}$ have an oxidation state of 3; or
(iv) $M^I_{x-u}M^{IV}_xM^V_zNb_{100-x-z}O_{250-u/2}$, wherein:
$M^{IV}$ is a cation having an average oxidation state of 4, optionally wherein all cations forming $M^{IV}$ have an oxidation state of 4.

5. The electrode according to any preceding claim, wherein:

   (i) x is 1, 2, 3, 4, 5, or 6; or.
   (ii) x is $2 \leq x \leq 5$; or
   (iii)

$$x = 4.$$

6. The electrode according to any preceding claim, wherein:

   (i)

$$0 \leq u \leq 3;$$

   or
   (ii)

$$0.01 \leq u \leq 2;$$

   or
   (ii)

$$u = 0.$$

7. The electrode according to any preceding claim, wherein $x \geq u + 1$.

8. The electrode according to any preceding claim, wherein:

   (i) the mixed niobium oxide only contains Li if a further cation other than Li and Nb is present; or
   (ii) $M^y$ does not contain Li; or
   (iii) the mixed niobium oxide does not contain Li.

9. An electrode comprising a mixed niobium oxide as an active electrode material, wherein the mixed niobium oxide has the formula $B_aM^V_zNb_{100-a-z}O_{250-a}$, wherein
   $M^V$ is a cation having an average oxidation state of 5, wherein $M^V$ is selected from Mn, Fe, Al, Ga, Y, In, La, Yb, Cu, Zn, Mg, Ni, Co, Ca, Ce, Zr, Ti, Sn, Ge, Si, V, P, Ta, W, Mo, Cr, and mixtures thereof;

$$0 \leq z \leq 10;$$

$$0 < a \leq 8.$$

10. The electrode according to claim 9, wherein:

    (i)

$$1 \leq a \leq 5;$$

or
(ii)

$$1.5 \leq a \leq 3;$$

or
(iii)

$$a = 2.$$

11. The electrode according to any preceding claim, wherein all cations forming $M^V$ have an oxidation state of 5.

12. The electrode according to any preceding claim, wherein:

(i)

$$0 \leq z \leq 5;$$

and/or
(ii)

$$z > 0;$$

or
(iii)

$$) z = 0.$$

13. An electrode comprising a mixed niobium oxide as an active electrode material, wherein the mixed niobium oxide has the formula $M_b Nb_{100-b} O_{250-2.5b+bc}$, wherein

M is a cation selected from P, B, W, Mo, V, Ti, Si, and mixtures thereof;
c is half of the average oxidation state of M;

$$1.5 \leq c \leq 3;$$

and

$$0.5 < b \leq 6;$$

optionally wherein the most intense peak between 18.15 - 18.65° $2\theta$ has a full width half maximum of > 0.2 in the X-ray diffraction pattern of the material with a CuKa source, further optionally wherein the full width half maximum is > 0.4, > 0.6, and/or <0.9.

14. The electrode according to any preceding claim, wherein the cations are partially substituted by cations of different oxidation state, optionally wherein up to 20 at.% the cations are substituted by cations of different oxidation state; and/or the oxygen anions are partially substituted by an alternative electronegative anion such as F, Cl, Br, S, Se, N, and mixtures thereof, optionally wherein up to 10 at.% of the oxygen anions have been partially substituted by an alternative electronegative anion.

15. The electrode according to any preceding claim, wherein the mixed niobium oxide has (i) a $D_{50}$ particle diameter in the range of 0.1-100 $\mu$m, or 0.5-50 $\mu$m, or 1-20 $\mu$m; and/or (ii) a BET surface area in the range of 0.1-100 $m^2$/g, or 0.2-50 $m^2$/g, or 0.5-20 $m^2$/g.

16. The electrode according to any preceding claim, wherein:

(i) the mixed niobium oxide has a Wadsley-Roth block structure comprising 4×4 octahedral blocks; and/or
(ii) the mixed niobium oxide has a monoclinic crystal structure; optionally wherein the mixed niobium oxide has unit cell parameters a = 25.7-31.4 Å, b= 3.4-4.2 Å, c= 15.8-19.3 Å, $\alpha$=90°, $\beta$=112.6-137.6°, $\gamma$=90°; and/or
(iii) the crystal structure of the mixed niobium oxide corresponds to the crystal structure of N-$Nb_2O_5$.

17. A metal-ion battery comprising the electrode of any one of claims 1-16, optionally wherein metal-ion battery is a lithium-ion battery and the electrode forms the anode, and/or is a lithium-ion battery having a reversible anode active material specific capacity of greater than 180 mAh/g at 20 mA/g, wherein the battery can be charged and discharged at current densities relative to the anode active material of 200 mA/g or more, or 1000 mA/g or more, or 2000 mA/g or more, or 4000 mA/g or more whilst retaining greater than 70% of the initial cell capacity at 20 mA/g.

18. An electrochemical device comprising an anode, a cathode, and an electrolyte disposed between the anode and the cathode, wherein the anode comprises a mixed niobium oxide is as defined in any one of claims 1-16 as an active anode material, wherein the device has an N/P ratio >1, wherein N/P is defined as:

$$\frac{\text{areal loading (mgcm}^{-2})(\text{anode}) \times \text{active fraction(wt\%)(anode)} \times \text{first lithiation capacity(mAhg}^{-1})(\text{anode})}{\text{areal loading (mgcm}^{-2})(\text{cathode}) \times \text{active fraction(wt\%)(cathode)} \times \text{first delithiation capacity(mAhg}^{-1})(\text{cathode})}$$

wherein:

areal loading (mgcm$^{-2}$) is the dry loading of the electrode composition, not taking into account the current collector;
active fraction (wt%) is the percentage of the dry electrode composition that is active material;
first lithiation/delithiation capacity (mAhg$^{-1}$) is the specific capacity at C/10 at 25 °C for the first lithiation cycle for the anode or the first delithiation cycle for the cathode measured on an equivalent half-cell with a Li-metal counter electrode.

**Patentansprüche**

1. Elektrode, umfassend ein gemischtes Nioboxid als aktives Elektrodenmaterial, wobei die Elektrode die Form einer Elektrodenzusammensetzung in elektrischem Kontakt mit einem Stromkollektor aufweist, wobei die Elektrodenzusammensetzung das gemischte Nioboxid umfasst, wobei das gemischte Nioboxid die Formel $M^I_{x-u}M^y_{(x/(5-y))}M^V_zNb_{100-(x/(5-y))z}O_{250-u/2}$ aufweist, wobei:

$M^I$ ein Kation mit einem Oxidationszustand von 1 ist, wobei $M^I$ aus Li, Na, K und Mischungen davon ausgewählt ist;
$M^y$ ein Kation mit einem durchschnittlichen Oxidationszustand von y ist, wobei $M^y$ ausgewählt ist aus Li, Na, K, Cu, Zn, Mg, Ca, Ni, Fe, Mn, Co, Cr, V, Al, B, Ga, Sc, Y, In, La, Yb, Ce, Zr, Ti, Sn, Ge, Si, P, Ta, W, Mo und Mischungen davon;
$M^V$ ein Kation mit einem durchschnittlichen Oxidationszustand von 5 ist, wobei $M^V$ ausgewählt ist aus Mn, Fe, Al, Ga, Y, In, La, Yb, Cu, Zn, Mg, Ni, Co, Ca, Ce, Zr, Ti, Sn, Ge, Si, V, P, Ta, W, Mo, Cr und Mischungen davon;

$$1 \leq y \leq 4;$$

$$0{,}5 \leq x \leq 6;$$

$$0 \leq z \leq 10;$$

$$0 \leq u \leq 5;$$

$$x > u \text{ ist.}$$

**2.** Elektrode nach Anspruch 1, wobei:

(i) y 1, 2, 3 oder 4 ist; oder
(ii) y $2 \leq y \leq 4$ ist; oder
(iii) y 2, 3 oder 4 ist.

**3.** Elektrode nach Anspruch 1 oder Anspruch 2, wobei alle Kationen, die $M^y$ bilden, den gleichen Oxidationszustand haben.

**4.** Elektrode nach einem der Ansprüche 1-3, wobei das gemischte Nioboxid die Formel aufweist:

(i) $M^I_{x-u}N^I_{x/4}M^V_zNb_{100-x/4-z}O_{250-u/2}$, wobei:
$N^I$ ein Kation mit einem Oxidationszustand von 1 ist; oder
(ii) $M^I_{x-u}M^{II}_{x/3}M^V_zNb_{100-x/3-z}O_{250-u/2}$, wobei:
$M^{II}$ ein Kation mit einem durchschnittlichen Oxidationszustand von 2 ist, wobei gegebenenfalls alle Kationen, die $M^{II}$ bilden, einen Oxidationszustand von 2 haben; oder
(iii) $M^I_{x-u}M^{III}_{x/2}M^V_zNb_{100-x/2-z}O_{250-u/2}$, wobei:
$M^{III}$ ein Kation mit einem durchschnittlichen Oxidationszustand von 3 ist, wobei gegebenenfalls alle Kationen, die $M^{III}$ bilden, einen Oxidationszustand von 3 aufweisen; oder
(iv) $M^I_{x-u}M^{IV}_xM^V_zNb_{100-x-z}O_{250-u/2}$, wobei:
$M^{IV}$ ein Kation mit einem durchschnittlichen Oxidationszustand von 4 ist, wobei gegebenenfalls alle $M^{IV}$ bildenden Kationen einen Oxidationszustand von 4 haben.

**5.** Elektrode nach einem der vorhergehenden Ansprüche, wobei:

(i) x 1, 2, 3, 4, 5 oder 6 ist; oder
(ii)

$$x\ 2 \leq x \leq 5$$

ist; oder
(iii)

$$x = 4$$

ist.

**6.** Elektrode nach einem der vorhergehenden Ansprüche, wobei:

(i)

$$0 \leq u \leq 3;$$

oder
(ii)

$$0,01 \leq u \leq 2;$$

oder
(ii)

$$u = 0$$

ist.

**7.** Elektrode nach einem der vorhergehenden Ansprüche, wobei $x \geq u + 1$ ist.

**8.** Elektrode nach einem der vorhergehenden Ansprüche, wobei:

(i) das gemischte Nioboxid nur Li enthält, falls ein weiteres Kation, das von Li und Nb verschieden ist, vorhanden ist; oder (ii) $M^y$ kein Li enthält; oder
(iii) das gemischte Nioboxid kein Li enthält.

**9.** Elektrode, die ein gemischtes Nioboxid als aktives Elektrodenmaterial umfasst, wobei das gemischte Nioboxid die Formel $B_aM^V_zND_{100-a-z}O_{250-a}$ aufweist, wobei $M^V$ ein Kation mit einem durchschnittlichen Oxidationszustand von 5 ist, wobei $M^V$ ausgewählt ist aus Mn, Fe, Al, Ga, Y, In, La, Yb, Cu, Zn, Mg, Ni, Co, Ca, Ce, Zr, Ti, Sn, Ge, Si, V, P, Ta, W, Mo, Cr und Mischungen davon;

$$0 \leq z \leq 10;$$

$$0 < a \leq 8$$

ist.

**10.** Elektrode nach Anspruch 9, wobei:

(i)

$$1 \leq a \leq 5;$$

oder
(ii)

$$1,5 \leq a \leq 3;$$

oder
(iii)

$$a = 2$$

ist.

**11.** Elektrode nach einem der vorhergehenden Ansprüche, wobei alle $M^V$ bildenden Kationen einen Oxidationszustand von 5 haben.

**12.** Elektrode nach einem der vorhergehenden Ansprüche, wobei:

(i)

$$0 \leq z \leq 5;$$

und/oder
(ii)

$$z > 0;$$

oder
(iii)

$$z = 0$$

ist.

13. Elektrode, umfassend ein gemischtes Nioboxid als aktives Elektrodenmaterial, wobei das gemischte Nioboxid die Formel $M_bNb_{100-b}O_{250-2.5b+bc}$ aufweist, wobei

M ein Kation ausgewählt aus P, B, W, Mo, V, Ti, Si und Mischungen davon ist;
c die Hälfte des durchschnittlichen Oxidationszustands von Mist;

$$1{,}5 \leq c \leq 3;$$

und

$$0{,}5 < b \leq 6$$

ist;
wobei gegebenenfalls der intensivste Peak zwischen 18,15 - 18,65° 2θ eine Halbwertsbreite von > 0,2 in dem Röntgenbeugungsspektrum des Materials mit einer CuKα-Quelle aufweist, wobei ferner gegebenenfalls die Halbwertsbreite > 0,4, > 0,6 und/oder < 0,9 ist.

14. Elektrode nach einem der vorhergehenden Ansprüche, wobei die Kationen teilweise durch Kationen mit anderem Oxidationszustand ersetzt sind, wobei gegebenenfalls bis zu 20 at.% (Atomprozent) der Kationen durch Kationen mit anderem Oxidationszustand ersetzt sind; und/oder die Sauerstoffanionen teilweise durch ein alternatives elektronegatives Anion wie F, Cl, Br, S, Se, N und Mischungen davon ersetzt sind, wobei gegebenenfalls bis zu 10 at.% der Sauerstoffanionen teilweise durch ein alternatives elektronegatives Anion ersetzt worden sind.

15. Elektrode nach einem der vorhergehenden Ansprüche, wobei das gemischte Nioboxid (i) einen $D_{50}$-Partikeldurchmesser im Bereich von 0,1-100 μm oder 0,5-50 μm oder 1-20 μm und/oder (ii) eine BET-Oberfläche im Bereich von 0,1-100 $m^2$/g oder 0,2-50 $m^2$/g oder 0,5-20 $m^2$/g aufweist.

16. Elektrode nach einem der vorhergehenden Ansprüche, wobei:

(i) das gemischte Nioboxid eine Wadsley-Roth-Blockstruktur mit $4 \times 4$ oktaedrischen Blöcken aufweist; und/oder
(ii) das gemischte Nioboxid eine monokline Kristallstruktur aufweist; wobei gegebenenfalls das gemischte Nioboxid Elementarzellenparameter a = 25,7-31,4 Å, b = 3,4-4,2 Å, c = 15,8-19,3 Å, α = 90°, β = 112,6-137,6°, γ = 90° aufweist; und/oder
(iii) die Kristallstruktur des gemischten Nioboxids der Kristallstruktur von N-$Nb_2O_5$ entspricht.

17. Metallionenbatterie, umfassend die Elektrode nach einem der Ansprüche 1-16, wobei die Metallionenbatterie gegebenenfalls eine Lithium-Ionen-Batterie ist und die Elektrode die Anode bildet, und/oder eine Lithium-Ionen-Batterie mit einem reversiblen Anodenaktivmaterial mit einer spezifischen Kapazität von mehr als 180 mAh/g bei 20 mA/g ist, wobei die Batterie mit Stromdichten relativ zu dem Anodenaktivmaterial von 200 mA/g oder mehr oder 1000 mA/g oder 2000 mA/g oder mehr oder 4000 mA/g oder mehr geladen und entladen werden kann, während mehr als 70 % der anfänglichen Zellkapazität bei 20 mA/g erhalten bleiben.

18. Elektrochemische Vorrichtung, umfassend eine Anode, eine Kathode und einen zwischen der Anode und der Kathode angeordneten Elektrolyten, wobei die Anode ein gemischtes Nioboxid, wie in einem der Ansprüche 1-16 definiert ist, als ein aktives Anodenmaterial umfasst, wobei die Vorrichtung ein N/P-Verhältnis > 1 aufweist, wobei N/P definiert ist als:

$$\frac{\text{Flächenbeladung (mgcm}^{-2})(\text{Anode}) \times \text{ aktive Fraktion(Gew.\%)(Anode}) \times \text{erste Lithiierungskapazität(mAhg}^{-1})(\text{Anode})}{\text{Flächenbeladung (mgcm}^{-2})(\text{Kathode}) \times \text{ aktive Fraktion(Gew.\%)(Kathode}) \times \text{erste Delithiierungskapazität(mAhg}^{-1})(\text{Kathode})}$$

wobei:

die Flächenbeladung (mgcm$^{-2}$) die Trockenbeladung der Elektrodenzusammensetzung ist, wobei der Stromkollektor nicht berücksichtigt wird;

die aktive Fraktion (Gew.%) der Prozentsatz der Trockenelektrodenzusammensetzung ist, der aktives Material ist; die erste Lithiierungs/Delithiierungskapazität (mAhg$^{-1}$) die spezifische Kapazität bei C/10 bei 25 °C für den ersten Lithiierungszyklus für die Anode oder den ersten Delithiierungszyklus für die Kathode ist, gemessen an einer äquivalenten Halbzelle mit einer Li-Metall-Gegenelektrode.

**Revendications**

1. Electrode comprenant un oxyde de niobium mixte comme matériau actif d'électrode, dans laquelle l'électrode est sous la forme d'une composition d'électrode en contact électrique avec un collecteur de courant, dans laquelle la composition d'électrode comprend l'oxyde de niobium mixte, dans laquelle l'oxyde de niobium mixte a la formule $M^I_{x-u}M^y_{(x/(5-y))}M^V_zNb_{100-(x/(5-y))-2}O_{250-u/2}$, dans laquelle : $M^I$ est un cation ayant un état d'oxydation de 1, dans laquelle $M^I$ est choisi parmi Li, Na, K et leurs mélanges ; $M^y$ est un cation ayant un état d'oxydation moyen de y, dans laquelle $M^y$ est choisi parmi Li, Na, K, Cu, Zn, Mg, Ca, Ni, Fe, Mn, Co, Cr, V, Al, B, Ga, Sc, Y, In, La, Yb, Ce, Zr, Ti, Sn, Ge, Si, P, Ta, W, Mo et leurs mélanges ; $M^V$ est un cation ayant un état d'oxydation moyen de 5, dans laquelle $M^V$ est choisi parmi Mn, Fe, Al, Ga, Y, In, La, Yb, Cu, Zn, Mg, Ni, Co, Ca, Ce, Zr, Ti, Sn, Ge, Si, V, P, Ta, W, Mo, Cr et leurs mélanges ;

$$1 \leq y \leq 4 \ ;$$

$$0,5 \leq x \leq 6 \ ;$$

$$0 \leq z \leq 10 \ ;$$

$$0 \leq u \leq 5 \ ;$$

$$x > u.$$

2. Electrode selon la revendication 1, dans laquelle :

   (i) y est 1, 2, 3 ou 4 ; ou
   (ii) y est $2 \leq y \leq 4$ ; ou
   (iii) y est 2, 3 ou 4.

3. Electrode selon la revendication 1 ou la revendication 2, dans laquelle tous les cations formant $M^y$ ont le même état d'oxydation.

4. Electrode selon l'une quelconque des revendications 1 à 3, dans laquelle l'oxyde de niobium mixte a la formule :

   (i) $M^I_{x-u}N^I_{x/4}M^V_zNb_{100-x/4-z}O_{250-u/2}$, dans laquelle :
   $N^I$ est un cation ayant un état d'oxydation de 1 ; ou
   (ii) $M^I_{x-u}M^{II}_{x/3}M^V_zNb_{100-x/3-z}O_{250-u/2}$, dans laquelle :
   $M^{II}$ est un cation ayant un état d'oxydation moyen de 2, éventuellement dans laquelle tous les cations formant $M^{II}$ ont un état d'oxydation de 2 ; ou
   (iii) $M^I_{x-u}M^{III}_{x/2}M^V_zNb_{100-x/2-z}O_{250-u/2}$, dans laquelle :
   $M^{III}$ est un cation ayant un état d'oxydation moyen de 3, éventuellement dans laquelle tous les cations formant $M^{III}$ ont un état d'oxydation de 3 ; ou
   (iv) $M^I_{x-u}M^{IV}_xM^V_zNb_{100-x-z}O_{250-u/2}$, dans laquelle :
   $M^{IV}$ est un cation ayant un état d'oxydation moyen de 4, éventuellement dans laquelle tous les cations formant $M^{IV}$ ont un état d'oxydation de 4.

5. Electrode selon l'une quelconque des revendications précédentes, dans laquelle :

   (i) x est 1, 2, 3, 4, 5, ou 6 ; ou
   (ii) x est $2 \leq x \leq 5$ ; ou
   (iii)

$$x = 4.$$

6. Electrode selon l'une quelconque des revendications précédentes, dans laquelle :

(i)

$$0 \leq u \leq 3 ;$$

ou
(ii)

$$0,01 \leq u \leq 2 ;$$

ou
(ii)

$$u = 0.$$

7. Electrode selon l'une quelconque des revendications précédentes, dans laquelle $x \geq u + 1$.

8. Electrode selon l'une quelconque des revendications précédentes, dans laquelle :

(i) l'oxyde de niobium mixte ne contient Li que si un autre cation autre que Li et Nb est présent ; ou (ii) $M^y$ ne contient pas de Li ; ou
(iii) l'oxyde de niobium mixte ne contient pas de Li.

9. Electrode comprenant un oxyde de niobium mixte comme matériau actif d'électrode, dans laquelle l'oxyde de niobium mixte a la formule $B_a M^V_z ND_{100-a-z} O_{250-a}$, dans laquelle $M^V$ est un cation ayant un état d'oxydation moyen de 5, dans laquelle $M^V$ est choisi parmi Mn, Fe, Al, Ga, Y, In, La, Yb, Cu, Zn, Mg, Ni, Co, Ca, Ce, Zr, Ti, Sn, Ge, Si, V, P, Ta, W, Mo, Cr et leurs mélanges ;

$$0 \leq z \leq 10 ;$$

$$0 < a \leq 8.$$

10. Electrode selon la revendication 9, dans laquelle :

(i)

$$1 \leq a \leq 5 ;$$

ou
(ii)

$$1,5 \leq a \leq 3 ;$$

ou
(iii)

$$a = 2.$$

11. Electrode selon l'une quelconque des revendications précédentes, dans laquelle tous les cations formant $M^V$ ont un état d'oxydation de 5.

12. Electrode selon l'une quelconque des revendications précédentes, dans laquelle :

$$x = 4.$$

(i)

$$0 \leq z \leq 5 \; ;$$

et/ou
(ii)

$$z > 0 \; ;$$

ou
(iii)

$$z = 0 \, .$$

**13.** Electrode comprenant un oxyde de niobium mixte comme matériau actif d'électrode, dans laquelle l'oxyde de niobium mixte a la formule $M_b Nb_{100-b} O_{250-2,5b+bc}$, dans laquelle M est un cation choisi parmi P, B, W, Mo, V, Ti, Si et leurs mélanges ;

c est la moitié de l'état d'oxydation moyen de M ;

$$1,5 \leq c \leq 3 \; ;$$

et

$$0,5 < b \leq 6 \; ;$$

éventuellement, dans laquelle le pic le plus intense entre 18,15 et 18,65° $2\theta$ a un demi-maximum de largeur totale > 0,2 dans le diagramme de diffraction des rayons X du matériau avec une source $CuK\alpha$, en outre éventuellement dans laquelle le demi-maximum de largeur totale est > 0,4, > 0,6 et/ou < 0,9.

**14.** Electrode selon l'une quelconque des revendications précédentes, dans laquelle les cations sont partiellement remplacés par des cations d'état d'oxydation différent, éventuellement dans laquelle jusqu'à 20 % atomique des cations sont substitués par des cations d'état d'oxydation différent ; et/ou les anions oxygène sont partiellement remplacés par un anion électronégatif alternatif tel que F, Cl, Br, S, Se, N, et leurs mélanges, éventuellement dans laquelle jusqu'à 10 % atomique des anions oxygène ont été partiellement remplacés par un anion électronégatif alternatif.

**15.** Electrode selon l'une quelconque des revendications précédentes, dans laquelle l'oxyde de niobium mixte a (i) un diamètre de particule $D_{50}$ dans la plage de 0,1-100 $\mu$m, ou 0,5-50 $\mu$m, ou 1-20 $\mu$m ; et/ou (ii) une superficie BET dans la plage de 0,1-100 m$^2$/g, ou 0,2-50 m$^2$/g, ou 0,5-20 m$^2$/g.

**16.** Electrode selon l'une quelconque des revendications précédentes, dans laquelle :

(i) l'oxyde de niobium mixte a une structure en blocs de Wadsley-Roth comprenant des blocs octaédriques 4x4 ; et/ou
(ii) l'oxyde de niobium mixte a une structure cristalline monoclinique ; éventuellement dans laquelle l'oxyde de niobium mixte a des paramètres de cellule unitaire a = 25,7-31,4 Å, b = 3,4-4,2 Å, c = 15,8-19,3 Å, $\alpha$ = 90°, $\beta$ = 112,6-137,6°, $\gamma$ = 90° ; et/ou
(iii) la structure cristalline de l'oxyde mixte de niobium correspond à la structure cristalline de $N\text{-}Nb_2O_5$.

**17.** Batterie métal-ion comprenant l'électrode selon l'une quelconque des revendications 1 à 16, éventuellement dans laquelle la batterie métal-ion est une batterie lithium-ion et l'électrode forme l'anode, et/ou est une batterie lithium-ion ayant une capacité spécifique de matériau actif d'anode réversible supérieure à 180 mAh/g à 20 mA/g, dans laquelle la batterie peut être chargée et déchargée à des densités de courant par rapport au matériau actif d'anode de 200 mA/g ou plus, ou 1 000 mA/g ou plus, ou 2 000 mA/g ou plus, ou 4 000 mA/g ou plus tout en conservant plus de 70 % de la capacité cellulaire initiale à 20 mA/g.

**18.** Dispositif électrochimique comprenant une anode, une cathode et un électrolyte disposé entre l'anode et la cathode, dans lequel l'anode comprend un oxyde de niobium mixte tel que défini dans l'une quelconque des revendications 1 à 16 en tant que matériau actif d'anode, dans lequel le dispositif a un rapport N/P > 1, dans lequel N/P est défini comme :

$$\frac{\text{charge surfacique } (\text{mgcm}^{-2})(\text{anode}) \times \text{ fraction active}(\% \text{ en poids})(\text{anode}) \times \text{ première capacité de lithiation } (\text{mAhg}^{-1})(\text{anode})}{\text{charge surfacique } (\text{mgcm}^{-2})(\text{cathode}) \times \text{ fraction active}(\% \text{ en poids})(\text{cathode}) \times \text{ première capacité de délithiation}(\text{mAhg}^{-1})(\text{cathode})}$$

dans lequel :

la charge surfacique ($\text{mgcm}^{-2}$) est la charge sèche de la composition d'électrode, sans tenir compte du collecteur de courant ;
la fraction active (% en poids) est le pourcentage de la composition d'électrode sèche qui est un matériau actif ;
la première capacité de lithiation/délithiation ($\text{mAhg}^{-1}$) est la capacité spécifique à C/10 à 25 °C pour le premier cycle de lithiation de l'anode ou le premier cycle de délithiation de la cathode mesurée sur une demi-cellule équivalente avec contre-électrode Li-métal.

## Fig. 1

## Fig. 2

## Fig. 3

## Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021074593 A

- WO 2021074594 A

**Non-patent literature cited in the description**

- **ZHU et al.** *J. Mater. Chem. A*, 2019, vol. 7, 25537
- **ZHU et al.** *Chem. Commun.*, 2020, vol. 56, 7321-7324
- **ANDERSSON**. *Zeitschrift für anorganische und allgemeine Chemie*, April 1967, vol. 351 (1-2), 106-112
- **PEKHTEREVA, YU.A.** ; **SHUKAEV, I.L.** *Zhurnal Neorganicheskoj Khimii*, 1999, vol. 44 (2), 290-294
- **CAVA et al.** *J. Electrochem. Soc.*, 1983, vol. 130, 2345
- **VILLAFUERTE-CASTREJÓN**. *Journal of Solid State Chemistry*, November 1987, vol. 71 (1), 103-108
- **NORIN** ; **BERTIL**. *Acta Chemica Scandinavica*, 1971, vol. 25, 741-743
- **REISMAN** ; **HOLTZBERG**. *J. Am. Chem. Soc.*, 1958, vol. 80 (24), 6503-6507
- **ANDERSSON**. *Zeitschrift für anorganische und allgemeine Chemie*, April 1967, vol. 351 (1-2)
- **GRIFFITH et al.** *J. Am. Chem. Soc.*, 2016, vol. 138 (28), 8888-8899